(19) Europäisches Patentamt
European Patent Office
Office européen des brevets

(11) EP 0 750 011 B1

(12) # EUROPÄISCHE PATENTSCHRIFT

(45) Veröffentlichungstag und Bekanntmachung des Hinweises auf die Patenterteilung:
**07.11.2001 Patentblatt 2001/45**

(51) Int Cl.[7]: **C08K 5/54**, C08G 77/388, C08G 77/26, C08L 101/00

(21) Anmeldenummer: **96810400.0**

(22) Anmeldetag: **14.06.1996**

(54) **Polysiloxane als Lichtschutzmittel**

Polysiloxanes as light stabilising agents

Polysiloxanes comme photostabilisateurs

(84) Benannte Vertragsstaaten:
**BE DE ES FR GB IT NL**

(30) Priorität: **23.06.1995 CH 185495**

(43) Veröffentlichungstag der Anmeldung:
**27.12.1996 Patentblatt 1996/52**

(73) Patentinhaber: **Ciba Specialty Chemicals Holding Inc.**
**4057 Basel (CH)**

(72) Erfinder:
- **Meuwly, Roger, Dr.**
  **1784 Cournillens (CH)**
- **Valet, Andreas, Dr.**
  **79589 Binzen (DE)**

(56) Entgegenhaltungen:
**EP-A- 0 388 218** **EP-A- 0 502 821**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Oligo- oder Polysiloxane, die mindestens eine Seitenkette vom Typ Hydroxyphenyl-diaryl-s-triazin enthalten, und ihre Verwendung als Stabilisatoren für organisches Material.

Die Eigenschaften eines Lichtschutzmittels werden nicht nur durch das aktive Zentrum festgelegt, beispielsweise durch die Spektraleigenschaften des UV-absorbierenden Chromophors. Entscheidende Bedeutung kommt auch denjenigen Einheiten des Moleküls zu, die primär Einarbeitbarkeit und Beweglichkeit im Substrat bestimmen.

Eine besondere Klasse von Lichtschutzmitteln stellen die siliziumhaltigen Stabilisatoren dar, die sich in der Regel dadurch auszeichnen, daß sie Silizium in Form von monomeren Silan- oder Siloxaneinheiten oder in Form von Oligo- oder Polysiloxanketten enthalten.

Die Kopplung einiger UV-Absorber vom Typ o-Hydroxyphenyl-benztriazol an Polysiloxane wurde beispielsweise beschrieben in US-A-4 859 759, US-A-4 923 914, US-A-5 102 707.

Die Copolymerisation eines UV-Absorbers vom Typ Hydroxyphenyl-diaryl-s-triazin über eine Acrylateinheit mit Si-haltigem Acrylat ist in US-A-5 198 498 und US-A-5 356 995 beschrieben.

US-A-5 420 204 lehrt die Kopplung einzelner reaktiver UV-Absorber vom Typ Hydroxyphenyl-diaryl-s-triazin mit einem Copolymer, das Disiloxan-Seitenketten enthält.

Spezielle monomere Stabilisatoren vom Typ Hydroxyphenyl-diaryl-s-triazin mit siliziumorganischen Resten werden u.a. vorgeschlagen in US-A-5 185 445, EP-A-530 135, US-A-5 364 749, US-A-5 300 414.

In US-A-5 185 445 wird überdies ein Oligosiloxan beschrieben, worin jedes Siliziumatom eine Seitenkette vom Typ 4-[2,4-Bis(2,4-dimethylphenyl)-1,3,5-triazin-6-yl]-3-hydroxyphenyloxypropyl trägt und das durch Polymerisation eines entsprechenden silylhaltigen Monomers erhalten wird.

Es wurde nunmehr gefunden, daß sich bestimmte Oligo- oder Polysiloxane, die mindestens eine Seitenkette vom Typ Hydroxyphenyl-diaryl-s-triazin enthalten, überraschenderweise gut als Lichtstabilisatoren eignen. Bei diesen neuen Verbindungen handelt es sich um Oligomere oder Polymere der Formel I,

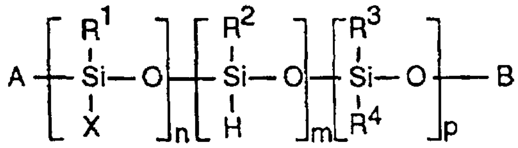

(I)

wenn X ein monovalenter Rest ist, oder um entsprechend vernetzte Verbindungen, wenn X ein mehrwertiger Rest ist, wobei die Einheiten der Formeln Ia, Ib und/oder Ic

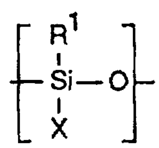

(Ia)

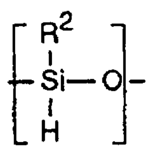

(Ib)

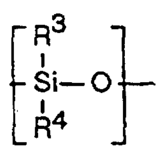

(Ic)

statistisch oder in Blöcken angeordnet sein können, und worin

n eine Zahl aus dem Bereich 1-100;
m eine Zahl aus dem Bereich 0-100;

p eine Zahl aus dem Bereich 0-100 darstellt;
A ein Rest der Formel

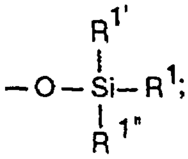

B ein Rest der Formel

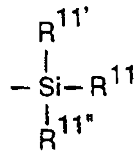

ist;
oder A und B im Fall, daß die Summe n + m + p eine Zahl aus dem Bereich 3-10 ist und die Summe m + p größer als 0 ist, gemeinsam eine direkte Bindung darstellen können;
$R^1$, $R^{1'}$, $R^{1''}$, $R^{11}$, $R^{11'}$, $R^{11''}$, $R^2$ und $R^3$, unabhängig voneinander, $C_1$-$C_{18}$-Alkyl, $C_5$-$C_{12}$-Cycloalkyl oder Phenyl bedeuten;
$R^4$ $C_1$-$C_{18}$-Alkyl, Phenyl, $C_2$-$C_6$-Hydroxyalkyl, $C_2$-$C_6$-Aminoalkyl,

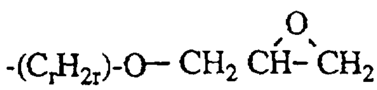
,
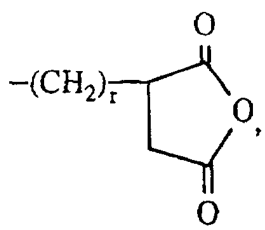
,
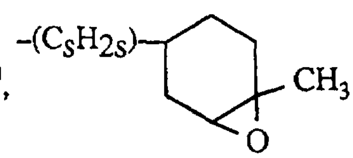

oder

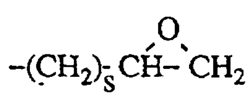

bedeutet, wobei r eine Zahl aus dem Bereich 2-6 ist und s 2 oder 3 bedeutet;
X ein mono- oder divalenter Rest der Formel II ist

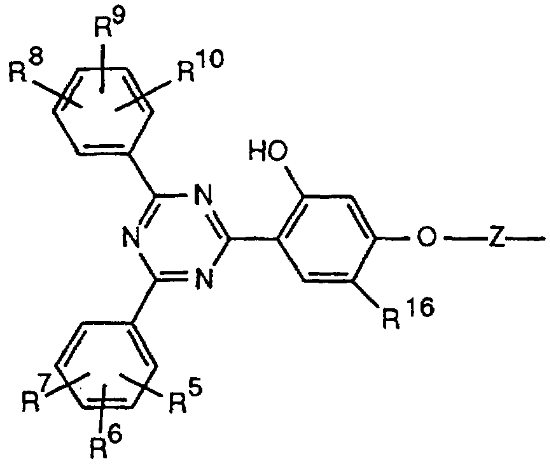

(II)

worin
$R^5$ und $R^7$, unabhängig voneinander, Wasserstoff, $C_1$-$C_{12}$-Alkyl, $C_3$-$C_6$-Alkenyl, Halogen oder CN darstellen;
$R^6$ Wasserstoff, $C_1$-$C_{12}$-Alkyl, $C_3$-$C_6$-Alkenyl, Halogen, CN, einen cycloaliphatischen, gesättigten Kohlenwasserstoffrest enthaltend 5-12 Kohlenstoffatome oder Phenyl bedeutet; oder
$R^5$ OH, $C_1$-$C_{18}$-Alkoxy oder $C_3$-$C_6$-Alkenoxy ist; $R^7$ Wasserstoff darstellt; und $R^6$ als monovalenter Rest eine der Bedeutungen OH, $C_1$-$C_{18}$-Alkoxy, $C_3$-$C_6$-Alkenoxy oder $-O-CH_2-CH(OR^{12})-CH_2-O-R^{17}$ hat, oder $R^6$ einen divalenten Rest der Formel -O-Z- darstellt, der über das Sauerstoffatom an den Phenylring gebunden ist;
$R^8$ die für $R^5$ angegebenen Bedeutungen umfaßt;
$R^9$ die für $R^6$ angegebenen Bedeutungen umfaßt; und
$R^{10}$ die für $R^7$ angegebenen Bedeutungen umfaßt;
$R^{12}$ Wasserstoff oder $C_1$-$C_{18}$-Alkyl ist;
$R^{16}$ Wasserstoff, $C_1$-$C_{24}$-Alkyl, $C_5$-$C_{12}$-Cycloalkyl oder $C_7$-$C_{15}$-Phenylalkyl ist;
$R^{17}$ $C_1$-$C_{18}$-Alkyl ist;
-O-Z- einen über das Sauerstoffatom an den Phenylring gebundenen divalenten Rest einer der Formeln $-O-(CH_2)_q-O-R^{21}-$,

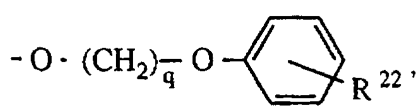

$-O-CH_2-CH(OR^{12})-CH_2-O-(CH_2)_t-$,

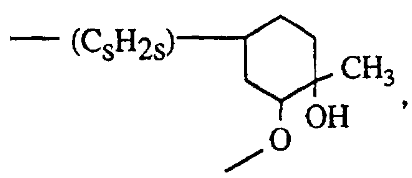

$-O-CO-(CH_2)_w-$ oder $-O-CH(R^{12})-CO-O-(CH_2)_w-$, oder $-O-C_3-C_{18}$-Alkylen darstellt;
$R^{21}$ $C_3$-$C_{12}$-Alkylen oder Cyclohexylen ist; und
$R^{22}$ $C_2$-$C_{12}$-Alkylen ist;

wobei q eine Zahl aus dem Bereich 2-4, t eine Zahl aus dem Bereich 3-4, und w eine Zahl aus dem Bereich 3-12 ist.

Stellen A und B gemeinsam eine direkte Bindung dar, resultiert eine cyclische Verbindung der Formel I.

$R^5$ und/oder $R^8$ als OH, Alkoxy oder Alkenoxy stehen vorzugsweise in o-Position zum Triazinring.

Für m = 0 und p = 0 stellt die Verbindung der Formel I ein Oligomer enthaltend mindestens 1 Einheit der Formel Ia

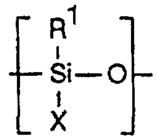 (Ia)

dar oder ein Homopolymer aus diesen Einheiten, wobei die Endgruppen jeweils durch A und B gebildet werden.

Sind m oder p oder m und p verschieden von 0, enthält die Verbindung der Formel I die Einheiten der Formeln Ia, Ib und/oder Ic

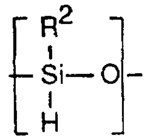 (Ib)

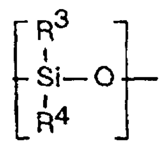 (Ic)

in beliebiger Reihenfolge, wobei statistische oder Block-Copolymere möglich sind.

Die Einheiten der Formeln Ia, Ib und/oder Ic in der Verbindung der Formel I können gleich oder verschieden sein.

Ist X einwertig, so sind die Verbindungen der Formel I linear; im Fall von mehrwertigen Resten X sind die Verbindungen der Formel I vernetzt.

Von besonderer technischer Bedeutung sind erfindungsgemäße Verbindungen der Formel I oder entsprechende vernetzte Verbindungen, worin X ein mono- oder divalenter Rest ist. Bevorzugt sind lineare Verbindungen der Formel I.

Weiterhin bevorzugt sind erfindungsgemäße Verbindungen, die 1-30 Einheiten der Formel Ia, 0-20 Einheiten der Formel Ic und 0-20, besonders 0-10 Einheiten der Formel Ib enthalten; insbesondere lineare Verbindungen der Formel I, worin n eine Zahl aus dem Bereich 1-30; m eine Zahl aus dem Bereich 0-20, vor allem 0-10; und p eine Zahl aus dem Bereich 0-20 darstellt.

Von besonderem technischem Interesse sind erfindungsgemäße Verbindungen enthaltend 1-100 Einheiten der Formel Ia und/oder 0-100 Einheiten der Formel Ic, wobei die Summe der Einheiten der Formeln Ia und Ic 3 bis 100 beträgt und die Gesamtzahl der Siliziumatome in Einheiten der Formel Ib 5 % der im Gesamtmolekül enthaltenen Siliziumatome nicht übersteigt; insbesondere Verbindungen der Formel I, worin gleichzeitig die folgenden Beziehungen gelten:

$$1 \leq n \leq 100;$$

$$0 \leq m \leq 0{,}05\,(m + p);$$

$$0 \leq p \leq 100,$$

und

$$3 \leq n + p \leq 100.$$

Besonders bevorzugt sind Verbindungen der Formel I, worin m 0 ist.

Ein cycloaliphatischer, gesättigten Kohlenwasserstoffrest enthaltend 5-12 Kohlenstoffatome umfaßt $C_5$-$C_{12}$-

Cycloalkyl sowie gemischte Cycloalkyl/Alkylreste mit entsprechender Anzahl Kohlenstoffatome, beispielsweise durch Alkyl substituiertes Cycloalkyl, durch Cycloalkyl substituiertes Alkyl sowie durch Cycloalkyl unterbrochenes Alkyl.

Vorzugsweise stehen $R^5$ und $R^8$ in ortho-Stellung zum Triazinring. $R^6$ und $R^9$ stehen bevorzugt in para-Stellung zum Triazinring.

In Formel II sind die durch $R^5$, $R^6$ und $R^7$ beziehungsweise $R^8$, $R^9$ und $R^{10}$ substituierten Phenylreste, worin $R^5$ beziehungsweise $R^8$ OH, Alkoxy oder Alkenoxy ist, vorzugsweise von Resorcin abgeleitet, so daß sich die Reste $R^5$ und $R^6$ beziehungsweise $R^8$ und $R^9$ zueinander in meta-Stellung befinden. Besonders bevorzugt stehen in dem Rest der Formel II die Substituenten $R^5$ und/oder $R^8$ in einer der Bedeutungen OH, Alkoxy oder Alkenoxy, und besonders wenn sie OH bedeuten, in ortho-Position zum Triazinring, so daß die Substituenten $R^6$ und/oder $R^9$ dann in para-Stellung zum Triazinring gebunden sind.

Ein Substituent Halogen bedeutet -F, -Cl, -Br oder -I; bevorzugt ist -Cl oder -F, vor allem -Cl.

Die Reste $R^1$ bis $R^{12}$, $R^{16}$, $R^{17}$ stellen als $C_1$-$C_{18}$-Alkyl im Rahmen der angegebenen Bedeutungen z.B. Methyl, Ethyl, Propyl, Isopropyl, Butyl, Isobutyl, tert-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl dar.

Verbindungen, worin $R^{16}$ Wasserstoff ist, sind bevorzugt.

Von besonderem technischem Interesse sind Verbindungen, worin $R^1$, $R^{1'}$, $R^{1''}$, $R^{11}$, $R^{11'}$, $R^{11''}$, $R^2$ und $R^3$ gleich sind.

$R^1$, $R^{1'}$, $R^{1''}$, $R^{11}$, $R^{11'}$, $R^{11''}$, $R^2$ und $R^3$ sind vorzugsweise Niederalkyl, vor allem Methyl.

$R^1$, $R^{1'}$, $R^{1''}$, $R^{11}$, $R^{11'}$, $R^{11''}$, $R^2$ und $R^3$ als $C_5$-$C_{12}$-Cycloalkyl und $R^6$ und $R^9$ als cycloaliphatiacher Rest umfassen beispielsweise die Bedeutungen Cyclopentyl, Cyclohexyl, Cycloheptyl, Cyclooctyl, Cyclononyl, Cyclodecyl, Cycloundecyl und Cyclododecyl.

Die erfindungsgemäßen Verbindungen sind vorzugsweise offenkettig. Besonders bevorzugt stellen A und B Trialkylsilyloxy bzw. Trialkylsilyl dar, vor allem Trimethylsilyloxy bzw. Trimethylsilyl.

$R^4$ als $C_2$-$C_6$-Hydroxyalkyl oder $C_2$-$C_6$-Aminoalkyl ist beispielsweise Hydroxy- oder Aminoethyl, Hydroxy- oder Aminopropyl, Hydroxy- oder Aminobutyl, Hydroxy- oder Aminopentyl, Hydroxy- oder Aminohexyl; bevorzugt sind geradkettige Reste, besonders solche, worin die Hydroxy- oder Aminogruppe endständig ist, z.B. 3-Hydroxypropyl oder 3-Aminopropyl.

$R^4$ als Rest der Formel

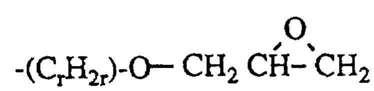

enthält meist eine unverzweigte

Alkylenkette

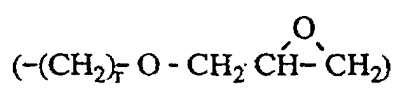

und ist vorzugsweise 3-Glycidyloxypropyl.

$R^4$ als Rest der Formel

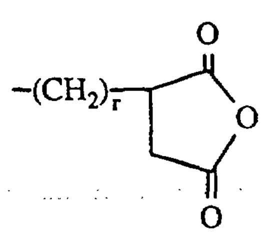

ist vorzugsweise

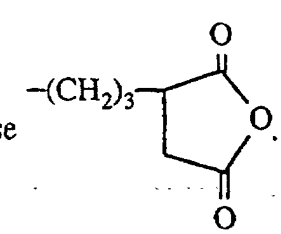

$R^4$ als Rest der Formel

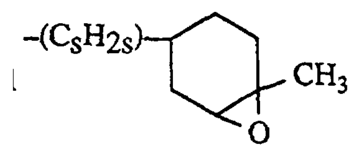

ist vorzugsweise

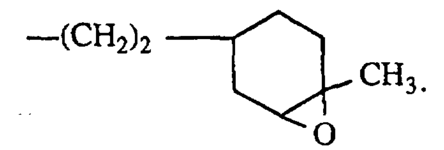

Stellt oder stellen einer oder mehrere der Reste $R^5$ bis $R^{10}$ $C_3$-$C_6$-Alkenyl dar, so ist dies beispielsweise Propenyl, Butenyl, Pentenyl oder Hexenyl; bevorzugt ist Allyl (2-Propenyl).

Bevorzugt sind erfindungsgemäße Verbindungen der Formel I oder entsprechend vernetzte Verbindungen, worin X ein Rest der Formel IIa ist

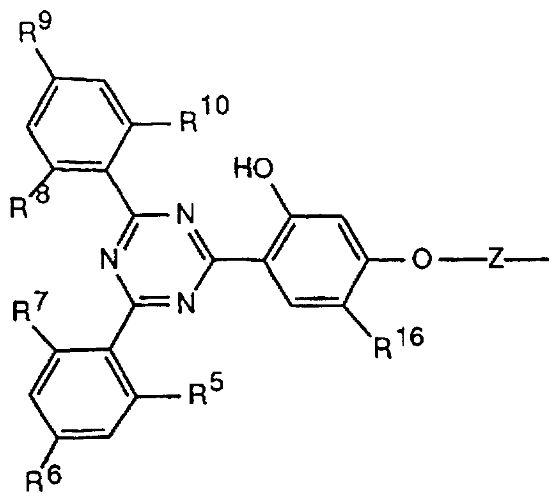

(IIa).

Von besonderer Bedeutung sind darunter die Verbindungen der Formel I oder entsprechende vernetzte Verbindungen, worin

$R^1$, $R^{1'}$, $R^{1''}$, $R^{11}$, $R^{11'}$, $R^{11''}$, $R^2$ und $R^3$ Methyl sind;
$R^4$ $C_1$-$C_{18}$-Alkyl, Hydroxypropyl, Aminopropyl oder

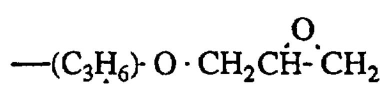

darstellt;
$R^5$ und $R^7$, unabhängig voneinander, Wasserstoff oder $C_1$-$C_4$-Alkyl darstellen;
$R^6$ Wasserstoff, $C_1$-$C_4$-Alkyl oder Phenyl bedeutet; oder
$R^5$ OH oder $C_1$-$C_6$-Alkoxy oder $C_3$-$C_6$-Alkenoxy ist; $R^7$ Wasserstoff darstellt; und $R^6$ als monovalenter Rest eine der Bedeutungen OH, $C_1$-$C_6$-Alkoxy oder -O-$CH_2$-CH($OR^{12}$)-$CH_2$-O-$R^{17}$ hat, oder $R^6$ einen divalenten Rest der Formel -O-Z- darstellt, der über das Sauerstoffatom an den Phenylring gebunden ist;
$R^8$ die für $R^5$ angegebenen Bedeutungen umfaßt;
$R^9$ die für $R^6$ angegebenen Bedeutungen umfaßt; und

$R^{10}$ die für $R^7$ angegebenen Bedeutungen umfaßt;
$R^{12}$ Wasserstoff oder $C_1$-$C_8$-Alkyl ist;
$R^{16}$ Wasserstoff ist;
$R^{17}$ $C_1$-$C_{18}$-Alkyl ist; und
-O-Z- einen über das Sauerstoffatom an den Phenylring gebundenen Rest einer der Formeln $-O-CH_2-CH(OR^{12})-CH_2-O-(CH_2)_3-$, $-O-CO-(CH_2)_w-$, wobei w eine Zahl aus dem Bereich 3-12 ist, oder $-O-C_3-C_6$-Alkylen darstellt.

Von hervorgehobener Bedeutung sind darunter die Verbindungen der Formel I, worin n eine Zahl aus dem Bereich 1-100 ist;

m = 0 ist;
p eine Zahl aus dem Bereich 0-100 ist; und
die Summe n + p eine Zahl aus dem Bereich 3-100 ist;
A Trimethylsilyloxy und B Trimethylsilyl ist; oder A und B gemeinsam im Fall, daß die Summe der Einheiten der Formeln Ia und Ic 3 bis 7 beträgt, eine direkte Bindung umfassen;
$R^1$, $R^2$ und $R^3$ Methyl sind;
$R^4$ $C_1$-$C_{18}$-Alkyl oder

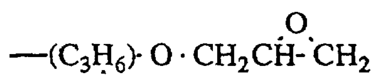

darstellt;
$R^5$ und $R^7$, unabhängig voneinander, Wasserstoff oder Methyl darstellen;
$R^6$ Wasserstoff, Methyl oder Phenyl bedeutet;
$R^8$ die für $R^5$ angegebenen Bedeutungen umfaßt;
$R^9$ die für $R^6$ angegebenen Bedeutungen umfaßt;
$R^{10}$ die für $R^7$ angegebenen Bedeutungen umfaßt;
$R^{16}$ Wasserstoff ist; und
Z $C_3$-$C_6$-Alkylen oder $-O-CH_2-CH(OH)-CH_2-O-(CH_2)_3-$ ist.

Die Herstellung der erfindungsgemäßen Verbindungen erfolgt zweckmäßig durch Umsetzung einer geeigneten ungesättigten Verbindung der Formel IV

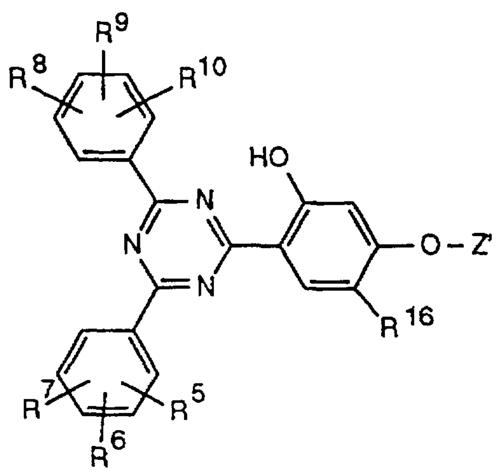

(IV)

mit einer Si-H enthaltenden Verbindung der Formel VI

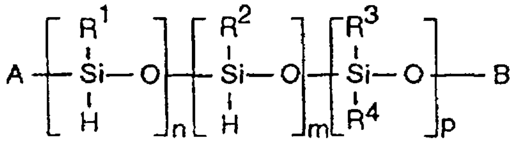

(VI)

worin Z' einer der Formeln $-(CH_2)_q-O-R^{23}$,

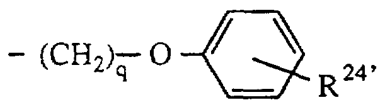

$-CH_2-CH(OR^{12})-CH_2-O-(CH_2)_{t-2}-CH=CH_2$,

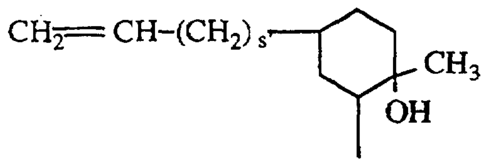

,

$-CO-(CH_2)_{w-2}-CH=CH_2$ oder $-CH(R^{12})-CO-O-(CH_2)_{w-2}-CH=CH_2$ entspricht oder $C_3$-$C_{18}$-Alkenyl darstellt;

$R^{23}$ $C_3$-$C_{12}$-Alkenyl oder Cyclohexenyl ist;
$R^{24}$ $C_2$-$C_{12}$-Alkenyl ist; und
s' 0 oder 1 ist;

und die übrigen Symbole die weiter oben angegebenen Bedeutungen haben.

Vorzugsweise werden auf ein Mol der Verbindung der Formel VI n Mol der ungesättigten Verbindung der Formel IV eingesetzt. Es ist auch möglich, die Reste $R^4$ und X im selben Verfahrensschritt an die Siloxankette zu binden; in diesem Fall werden zweckmäßig auf ein Mol einer Verbindung der Formel VII

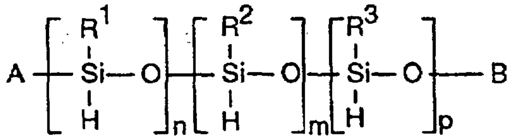

(VII)

n Mol der ungesättigten Verbindung der Formel IV zusammen mit p Mol einer ungesättigten Verbindung VIII ausgewählt aus $C_2$-$C_{18}$-Alken, besonders $C_3$-$C_{18}$-Alken, $C_3$-$C_6$-Hydroxyalken, $C_3$-$C_6$-Aminoalken,

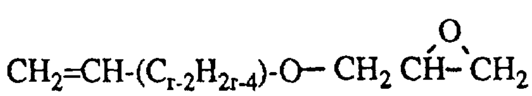

,

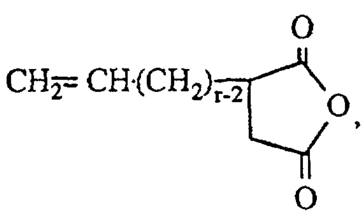

,

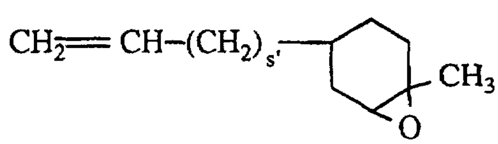

oder

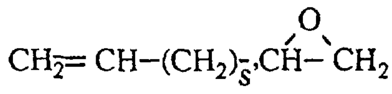

eingesetzt. Die Symbole r und s' haben die oben angegebenen Bedeutungen.

Nach dem obigen Verfahren erhältliche Verbindungen bzw. Verbindungsgemische sind Gegenstand vorliegender Erfindung.

Vorzugsweise befindet sich die ethylenisch ungesättigte Einheit in Z' (Formel IV) oder in Verbindung VIII endständig; beispielsweise ist Verbindung VIII als $C_8$-Alken bevorzugt 1-Octen.

Meist wird die Umsetzung in Gegenwart geeigneter Katalysatoren durchgeführt, dies können unter anderem Edelmetallkatalysatoren sein wie Pt- oder Rh-Katalysatoren, als Beispiele seien genannt $H_2PtCl_6$ oder $PtCl_2(C_6H_5\text{-}CH{=}CH_2)_2$; die Konzentration des Katalysators beträgt zweckmäßig 1-1000 ppm (1-1000 Äquivalente auf $10^6$ Äquivalente Si-H).

Die Umsetzung kann beispielsweise in geeigneten aprotischen organischen Lösemitteln, beispielsweise in THF (Tetrahydrofuran), Dioxan, Hexan, Heptan, Cyclohexan, Toluol, Xylol, oder ohne Zusatz von Lösemittel durchgeführt werden. Die Reaktionstemperatur liegt zweckmäßig im Bereich 20-150°C, bevorzugt beträgt sie 80-130°C.

Alternativ kann die Verbindung der Formel VI auch zunächst mit einer als Brückenglied dienenden Verbindung einer der Formeln

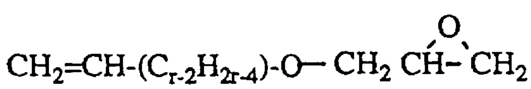

,

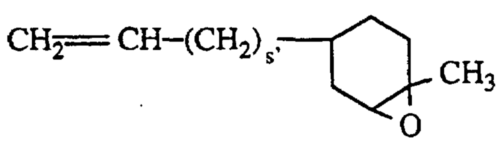

oder

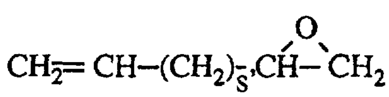

zur Reaktion gebracht werden; das Reaktionsprodukt läßt sich anschließend in an sich bekannter Weise mit einer Verbindung der Formel IX

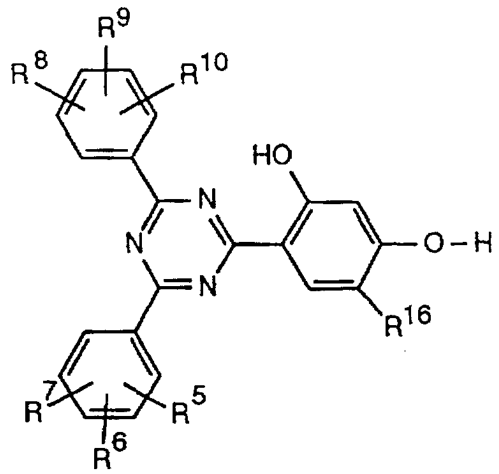

(IX)

zum gewünschten Endprodukt der Formel I oder einer entsprechenden vernetzten Verbindung umsetzen.

Die Ausgangsverbindungen der Formeln IV, VI, VII sind bekannte Verbindungen, die sich beispielsweise gemäß EP-A-434 608 oder der eingangs erwähnten US-A-5 102 707 oder in Analogie zu dort erwähnten Methoden darstellen lassen. Viele dieser Ausgangsverbindungen sind kommerziell erhältlich.

Die erfindungsgemäßen Verbindungen können vorteilhaft als Stabilisatoren für organisches Material, insbesondere organische Polymere, gegen deren Schädigung durch Licht, Sauerstoff und Wärme verwendet werden. Die Erfindung betrifft daher auch ein Verfahren zum Stabilisieren organischem Material gegen Schädigung durch Licht, Sauerstoff und Wärme, dadurch gekennzeichnet, daß man diesem Material mindestens eine Verbindung der Formel I oder eine entsprechende vernetzte Verbindung beimischt, sowie die Verwendung dieser Verbindungen als Stabilisator für organisches Material gegen Schädigung durch Licht, Sauerstoff und Wärme.

Gegenstand der Erfindung ist weiterhin eine Zusammensetzung enthaltend

A) ein gegen Schädigung durch Licht, Sauerstoff und/oder Hitze empfindliches organisches Material, insbesondere ein organisches Polymer und
B) als Stabilisator eine Verbindung der Formel I oder eine entsprechend vernetzte Verbindung.

Von besonderem Interesse ist die Verwendung in polymeren Materialien, wie sie in Kunststoffen, Kautschuken, Anstrichstoffen oder Klebstoffen vorliegen. Beispiele für erfindungsgemäß zu stabilisierende Polymere sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.

8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere,Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd oder deren Copolymere mit Bisglycidylethern.

13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamid-imide, Polyetherimide, Polyesterimide, Polyhydantoine und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z.B. von Epoxyacrylaten, Urethan-acrylaten oder Polyester-acrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Die Menge des erfindungsgemäß zugesetzten Stabilisators hängt vom jeweiligen Substrat und dessen Verwendungszweck ab. Im allgemeinen genügen Mengen von 0,01 bis 5 Gew.-%, bevorzugt verwendet man 0,05 bis 3 Gew.-%, bezogen auf das zu stabilisierende Polymer. Erfindungsgemäß sind daher insbesondere Polymere enthaltend 0,01 bis 5 Gew.-%, vor allem 0,05 bis 3 Gew.-%, mindestens einer Verbindung der Formel I und/oder einer entsprechend vernetzten Verbindung.

In bestimmten Fällen kann es von Vorteil sein, zwei oder mehrere der erfindungsgemäßen Verbindungen zu verwenden. Die erfindungsgemäßen Zusammensetzungen können darüberhinaus außer dem erfindungsgemäßen Stabilisator noch andere Stabilisatoren oder sonstige Zusätze enthalten, wie z.B. Antioxidantien, weitere Lichtschutzmittel, Metalldesaktivatoren, Phosphite oder Phosphonite. Beispiele hierfür sind die folgenden Typen von Verbindungen:

1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Dinonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol,

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis-(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis (3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris (3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N, N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin,

N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl)-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300;

$$[R-CH_2CH_2-COO(CH_2)_3]_2-$$

mit R = 3'-tert-Butyl-4'-hydroxy-5'-2H-benzotriazol-2-yl-phenyl.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäure-methylester, α-Cyano-ß-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon),4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyloxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyloxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin,

3. Metalldesaktivatoren, wie z.B. N,N'-Diphenyloxalsäurediamid, N-Salicylal-N'-salicyloylhydrazin, N,N'-Bis (salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-di-benz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4-di-tert-butyl-6-methylphenyl)-methylphosphit, Bis-(2,4-di-tert-butyl-6-methylphenyl)-ethylphosphit.

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron,

N-Lauryl-alpha-undecyl-nitron, N-Tetradecyl-alpha-tridecylnitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäure-di-stearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die Art und Menge der zugesetzten weiteren Stabilisatoren wird von der Art des zu stabilisierenden Substrates und dessen Verwendungszweck bestimmt; häufig werden 0,1 bis 5 Gew.-% bezogen auf das zu stabilisierende Material verwendet.

Die erfindungsgemäße Zusammensetzung enthält vorzugsweise neben den Komponenten A, und B als Komponente C ein Lichtschutzmittel vom Typ der sterisch gehinderten Amine, der 2-(2-Hydroxyphenyl)-1,3,5-triazine und/oder der 2-Hydroxyphenyl-2H-benztriazole. Beispiele für solche Costabilisatoren finden sich in obiger Liste unter den Punkten 2.1, 2.6 und 2.8.

Zur Erzielung maximaler Lichtbeständigkeit ist vor allem der Zusatz von sterisch gehinderten Aminen, wie sie in der genannten Liste unter 2.6 aufgeführt sind, von Interesse. Eine Zusammensetzung, welche neben den Komponenten A, und B als Komponente C ein Lichtschutzmittel vom Typ der sterisch gehinderten Amine (HALS) enthält, ist daher besonders bevorzugt.

Vorzugsweise handelt es sich dabei um ein 2,2,6,6-Tetraalkylpiperidinderivat, das mindestens eine Gruppe der Formel

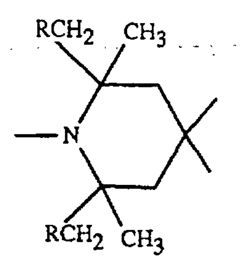

enthält, worin R Wasserstoff oder Methyl, insbesondere Wasserstoff, ist

Besonders vorteilhaft lassen sich die erfindungsgemäßen Verbindungen einsetzen in Zusammensetzungen, die als Komponente A ein organisches Polymer, beispielsweise ein synthetisches, insbesondere thermoplastisches organisches Polymer, oder ein Bindemittel für Überzüge wie beispielsweise Lacke oder ein fotografisches Material

enthalten.

Wenn es sich bei Komponente A um ein Bindemittel für Überzüge handelt, ist der Zusatz der oben beschriebenen Komponente C zur erfindungsgemäßen Zusammensetzung besonders empfehlenswert.

Von Interesse sind auch Zusammensetzungen, worin Komponente (A) ein Polyolefin ist, beispielsweise Polyethylen oder Polypropylen,

Die Einarbeitung in das zu stabilisierende organische Material, beispielsweise in die synthetischen organischen, insbesondere thermoplastischen Polymere, kann durch Zusatz der erfindungsgemäßen Verbindungen und gegebenenfalls weiterer Additive nach den in der Technik üblichen Methoden erfolgen. Die Einarbeitung kann zweckmäßig vor oder während der Formgebung, beispielsweise durch Mischen der pulverförmigen Komponenten oder durch Zusatz des Stabilisators zur Schmelze oder Lösung des zu stabilisierenden Materials, oder durch Aufbringen der gelösten oder dispergierten Verbindungen auf das zu stabilisierende Material, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der erfindungsgemäßen Verbindungen in Polymere besteht in deren Zugabe vor oder während der Polymerisation der entsprechenden Monomeren bzw. vor der Vernetzung.

Die erfindungsgemäßen Verbindungen oder Mischungen davon können auch in Form eines Masterbatches, der diese Verbindungen beispielsweise in einer Konzentration von 2,5 bis 25 Gew.% enthält, den zu stabilisierenden Kunststoffen zugesetzt werden.

Zweckmäßig kann die Einarbeitung der erfindungsgemäßen Verbindungen nach folgenden Methoden erfolgen:

- als Emulsion oder Dispersion (z.B. zu Latices oder Emulsionspolymeren)
- als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Die so erhaltenen stabilisierten Polymerzusammensetzungen können nach den üblichen Methoden, wie z.B. durch Heißpressen, Spinnen, Extrudieren oder Spritzgießen, in geformte Gegenstände überführt werden, wie z.B. in Fasern, Folien, Bändchen, Platten, Stegplatten, Gefäße, Rohre und sonstige Profile.

Die Erfindung betrifft daher weiterhin die Verwendung der erfindungsgemäßen Polymerzusammensetzung zur Herstellung eines geformten Gegenstandes.

Besonders bevorzugt ist die Verwendung der erfindungsgemäßen Verbindungen als Stabilisatoren in Überzugsmitteln, beispielsweise Lacken aller Art. Dies bedeutet auch ein Verfahren gemäß obiger Beschreibung, worin das organische Material ein Bindemittel für einen Lack ist. Bei den Lacken kann es sich um pigmentierte oder unpigmentierte Lacke oder Metalleffektlacke handeln. Sie können ein organisches Lösungsmittel enthalten oder lösungsmittelfrei sein oder wässrige Lacke sein.

Die Verwendung in Mehrschichtsystemen ist möglich, wobei die Konzentration der erfindungsgemäßen Verbindung (Komponente B) in der Deckschicht höher sein kann, beispielsweise 1 bis 15 Gew.-Teile B, vor allem 3-10 Gew.-Teile B auf 100 Gew.-Teile festes Bindemittel A.

Als Bindemittel (Komponente A) kommen prinzipiell alle in der Technik gebräuchlichen in Betracht, beispielsweise solche, wie sie beschrieben sind in Ullmann's Encyclopedia of Industrial Chemistry, 5. Ed., Vol. A18, pp. 368-426, VCH, Weinheim 1991. Allgemein handelt es sich um ein filmbildendes Bindemittel basierend auf einem thermoplastischen oder thermohärtbaren Harz, vorwiegend auf einem thermohärtbaren Harz. Beispiele hierfür sind Alkyd-, Acryl-, Polyester-, Phenol-, Melamin-, Epoxid-, Polyurethanharze und deren Gemische.

Komponente A kann ein kalt aushärtbares oder ein heiß aushärtbares Bindemittel sein, wobei die Zugabe eines Härtungskatalysators vorteilhaft sein kann. Geeignete Katalysatoren, die die Aushärtung des Bindemittels beschleunigen, sind beispielsweise beschrieben in Ullmann's Encyclopedia of Industrial Chemistry, Vol. A 18, S. 469, VCH Verlagsgesellschaft, Weinheim 1991.

Bevorzugt sind Überzugsmittel, worin die Komponente A ein Bindemittel aus einem funktionellen Acrylatharz und einem Vernetzer ist.

Beispiele für Überzugsmittel mit speziellen Bindemitteln sind die folgenden:

1. Lacke auf Basis von kalt- oder heiß-vernetzbaren Alkyd-, Acrylat-, Polyester-, Epoxid- oder Melaminharzen oder Mischungen solcher Harze, gegebenenfalls mit Zusatz eines Härtungskatalysators;
2. Zweikomponenten-Polyurethanlacke auf Basis von hydroxylgruppenhaltigen Acrylat-, Polyester- oder Polyetherharzen und aliphatischen oder aromatischen Isocyanaten, Isocyanuraten oder Polyisocyanaten;
3. Einkomponenten-Polyurethanlacke auf Basis von blockierten Isocyanaten, Isocyanuraten oder Polyisocyanaten, die während des Einbrennens deblockiert werden;
4. Zweikomponentenlacke auf Basis von (Poly)ketiminen und aliphatischen oder aromatischen Isocyanaten, Isocyanuraten oder Polyisocyanaten;

5. Zweikomponentenlacke auf Basis von (Poly)ketiminen und einem ungesättigten Acrylatharz oder einem Polyacetoacetatharz oder einem Methacrylamidoglykolatmethylester;

6. Zweikomponentenlacke auf Basis von carboxyl- oder aminogruppenhaltigen Polyacrylaten und Polyepoxiden;

7. Zweikomponentenlacke auf Basis von anhydridgruppenhaltigen Acrylatharzen und einer Polyhydroxy- oder Polyaminokomponente;

8. Zweikomponentenlacke auf Basis von (Poly)oxazolinen und anhydridgruppenhaltigen Acrylatharzen oder ungesättigten Acrylatharzen oder aliphatischen oder aromatischen Isocyanaten, Isocyanuraten oder Polyisocyanaten;

9. Zweikomponentenlacke auf Basis von ungesättigten Polyacrylaten und Polymalonaten;

10. thermoplastische Polyacrylatlacke auf Basis von thermoplastischen Acrylatharzen oder fremdvernetzenden Acrylatharzen in Kombination mit veretherten Melaminharzen;

11. Lacksysteme auf Basis von siloxanmodifizierten Acrylatharzen;

12. Lacksysteme auf Basis von fluormodifizierten Acrylatharzen, und

13. Lacksysteme auf Basis von Allylglycidylethern.

Bei den erfindungsgemäßen Überzugsmitteln kann es sich auch um strahlenhärtbare Überzugsmittel handeln. In diesem Fall besteht das Bindemittel im wesentlichen aus monomeren oder oligomeren Verbindungen mit ethylenisch ungesättigten Bindungen, die nach der Applikation durch UV- oder Elektronenstrahlung gehärtet, d.h. in eine vernetzte, hochmolekulare Form überführt werden. Häufig werden Photoinitiatoren eingesetzt wie z.B. Benzophenon, Benzophenonderivate, Acetophenon, Acetophenonderivate wie beispielsweise α-Hydroxycycloalkylphenylketone, Dialkoxyacetophenone, α-Hydroxy- oder α-Aminoacetophenone, 4-Aroyl-1,3-Dioxolane, Benzoinalkylether und Benzilketale, Monoacylphosphinoxide, Bisacylphosphinoxide, Ferrocene oder Titanocene. Entsprechende Systeme sind in der oben genannten Publikation, Ullmann's Encyclopedia of Industrial Chemistry, 5. Ed., Vol. A18, Seiten 451-453, beschrieben. In strahlenhärtbaren Überzugsmitteln können die erfindungsgemäßen Verbindungen auch ohne Zusatz von sterisch gehinderten Aminen eingesetzt werden.

Das Überzugsmittel kann außer den Komponenten A, B und gegebenenfalls C weitere Komponenten enthalten, z.B. Lösungsmittel, Pigmente, Farbstoffe, Weichmacher, Stabilisatoren, Thixotropiemittel, Trocknungskatalysatoren oder/und Verlaufhilfsmittel. Mögliche Komponenten sind beispielsweise solche, wie sie in Ullmann's Encyclopedia of Industrial Chemistry, 5. Ed., Vol. A18, pp. 429-471, VCH, Weinheim 1991 beschrieben sind.

Mögliche Trocknungskatalysatoren beziehungsweise Härtungskatalysatoren sind beispielsweise organische Metallverbindungen, Amine, aminogruppenhaltige Harze oder/und Phosphine. Organische Metallverbindungen sind z.B. Metallcarboxylate, insbesondere solche der Metalle Pb, Mn, Co, Zn, Zr oder Cu, oder Metallchelate, insbesondere solche der Metalle Al, Ti oder Zr oder Organometallverbindungen wie z.B. Organozinnverbindungen.

Beispiele für Metallcarboxylate sind die Stearate von Pb, Mn oder Zn, die Octoate von Co, Zn oder Cu, die Naphthenate von Mn und Co oder die entsprechenden Linoleate, Resinate oder Tallate.

Beispiele für Metallchelate sind die Aluminium-, Titan- oder Zirkonium-Chelate von Acetylaceton, Ethylacetylacetat, Salicylaldehyd, Salicylaldoxim, o-Hydroxyacetophenon oder Ethyl-trifluoracetylacetat und die Alkoxide dieser Metalle.

Beispiele für Organozinnverbindungen sind Dibutylzinnoxid, Dibutylzinn-dilaurat oder Dibutylzinn-dioctoat.

Beispiele für Amine sind vor allem tertiäre Amine, wie z.B. Tributylamin, Triethanolamin, N-Methyl-diethanolamin, N-Dimethylethanolamin, N-Ethylmorpholin, N-Methylmorpholin oder Diazabicyclooctan (Triethylendiamin) sowie deren Salze. Weitere Beispiele sind quaternäre Ammoniumsalze, wie z.B. Trimethylbenzylammoniumchlorid.

Aminogruppenhaltige Harze sind gleichzeitig Bindemittel und Härtungskatalysator. Beispiel hierfür sind aminogruppenhaltige Acrylat-copolymere.

Als Härtungskatalysator können auch Phosphine verwendet werden, wie z.B. Triphenylphosphin.

Die erfindungsgemäßen Überzugsmittel können auf beliebige Substrate aufgebracht werden, beispielsweise auf Metall, Holz, Kunststoff oder keramische Materialien. Vorzugsweise werden sie beim Lackieren von Automobilen als Decklack verwendet. Besteht der Decklack aus zwei Schichten, wovon die untere Schicht pigmentiert ist und die obere Schicht nicht pigmentiert ist, so kann das erfindungsgemäße Überzugsmittel für die obere oder die untere Schicht oder für beide Schichten verwendet werden, vorzugsweise jedoch für die obere Schicht.

Die erfindungsgemäßen Überzugsmittel können auf die Substrate nach den üblichen Verfahren aufgebracht werden, beispielsweise durch Streichen, Besprühen, Gießen, Tauchen oder Elektrophorese; s.a. Ullmann's Encyclopedia of Industrial Chemistry, 5. Ed., Vol. A18, pp. 491-500.

Die Härtung der Überzüge kann - je nach dem Bindemittelsystem - bei Raumtemperatur oder durch Erwärmen erfolgen. Vorzugsweise härtet man die Überzüge bei 50-150°C, Pulverlacke auch bei höheren Temperaturen.

Die erfindungsgemäß erhaltenen Überzüge weisen eine hervorragende Beständigkeit gegen schädigende Einflüsse von Licht, Sauerstoff und Wärme auf; insbesondere ist auf die gute Licht- und Witterungsbeständigkeit der

so erhaltenen Überzüge, beispielsweise Lacke, hinzuweisen.

Die Erfindung betrifft daher auch einen Überzug, besonders ein Lack, der durch einen Anteil der erfindungsgemäßen Verbindung gegen schädigende Einflüsse von Licht, Sauerstoff und Wärme stabilisiert ist Der Lack ist vorzugsweise ein Decklack für Automobile.

Die Lacke können als Einschicht- oder Zweischichtlacke appliziert werden, wobei die erfindungsgemäßen Stabilisatoren vorzugsweise der unpigmentierten obersten Schicht zugesetzt werden.

Die Lacke können auf die Substrate (Metall, Plastik, Holz etc.) nach den üblichen Verfahren aufgebracht werden, beispielsweise durch Streichen, Besprühen, Gießen, Tauchen oder Elektrophorese.

Meistens enthalten die Überzugsmittel ein organisches Lösungsmittel oder Lösungsmittelgemisch, in dem das Bindemittel löslich ist. Das Überzugsmittel kann aber auch eine wässrige Lösung oder Dispersion sein. Das Vehikel kann auch ein Gemisch eines organischen Lösungmittels und Wasser sein. Das Überzugsmittel kann auch ein feststoffreicher Lack (high solids Lack) sein oder kann lösungsmittelfrei (Pulverlack) sein.

Die Pigmente können anorganische, organische oder metallische Pigmente sein. Vorzugsweise enthalten die erfindungsgemäßen Überzugsmittel keine Pigmente und werden als Klarlack verwendet.

Die folgenden Beispiele beschreiben die Ausführung der Erfindung näher ohne diese auf die Beispiele beschränken zu wollen. Darin beziehen sich Teile und % auf Gewichtsteile und Gewichts-%, sofern nichts anderes angegeben ist. Unter den verwendeten Abkürzungen bedeuten:

MW Molmasse (g/Mol) = $M_n$;
$M_n$ Zahlenmittel der Molmasse;
$M_w$ Massenmittel der Molmasse;
GPC Gelpermeationschromatographie.

Berechnete Prozentangaben bei der Elementaranalyse beruhen bei Produkten, für die nur eine empirische Strukturformel angebbar ist, auf der aus $^1$H-NMR-Daten abgeleiteten Formel.

A) Herstellung von Ausgangsverbindungen

A1) Herstellung von Polymethyl-(3-glycidyloxypropyl)siloxan

4,0 g Polymethylhydrogensiloxan (MW = 400 g/Mol) werden binnen 1 h tropfenweise unter Rühren zu einer Mischung aus 11,4 g (100 mMol) Allylglycidylether und 20 mg (0,05 mMol) $PtCl_2$(Styrol)-Komplex gegeben, die bei 100°C unter Stickstoff gehalten wird. Anschließend wird für 10 h unter Rühren auf 100°C gehalten. Nach Abkühlen und Verdünnen mit Toluol wird die Lösung durch Filtration durch etwas Silicagel gereinigt. Nach Einengen des Filtrates erhält man 4,1 g einer Verbindung der empirischen Formel

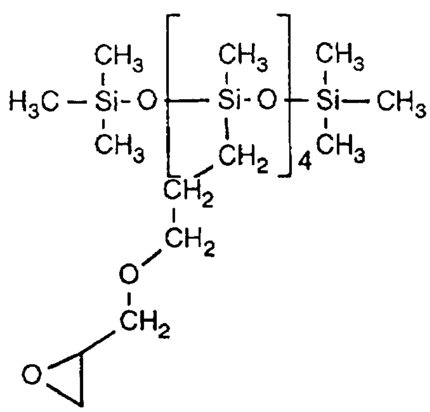

als farblose Flüssigkeit. Epoxidzahl: berechnet 4,64 Mol/kg; gefunden 4,47 Mol/kg.

A2) Herstellung von Methyloctyl-(3-glycidyloxypropyl)siloxan Copolymer

20,0 g (0,05 Mol) Polymethylhydrogensiloxan (MW = 400 g/Mol) werden binnen 2 h unter Rühren zu einer Mischung aus 11,4 g (100 mMol) Allylglycidylether und 5 mg (0,013 mMol) $PtCl_2$(Styrol)-Komplex gegeben, die bei 100°C unter Stickstoff gehalten wird. Die Mischung wird für 6 h unter Rühren auf 100°C gehalten, dann werden 11,2 g (0,1 Mol) 1-Octen zugesetzt und für weitere 20 h auf 100°C gehalten. Nach Abkühlen wird die Lösung durch Filtration durch etwas Silicagel gereinigt Nach Einengen des Filtrates erhält man 25,8 g einer Verbindung der mittleren Formel (basie-

rend auf $^1$H-NMR)

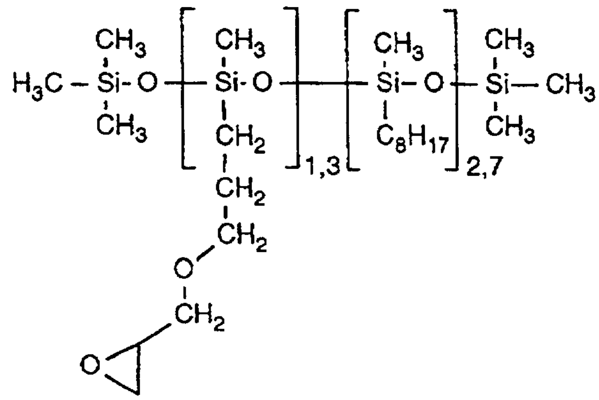

als farblose Flüssigkeit; Epoxidzahl: berechnet 1,52 Mol/kg; gefunden 1,60 Mol/kg.

A3) Nach der unter A2) beschriebenen Methode wird unter Verwendung entsprechend geänderter Mengen an Ausgangsverbindungen eine Verbindung der mittleren Formel (basierend auf $^1$H-NMR)

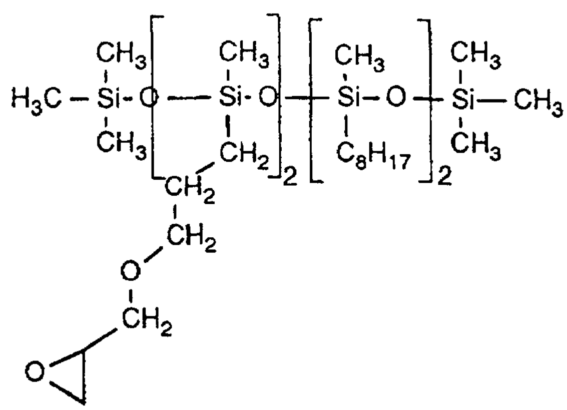

als farblose Flüssigkeit erhalten.

B) <u>Herstellung erfindungsgemäßer Siloxanverbindungen</u>

B1) 3,0 g Polymethylhydrogensiloxan (MW = 400 g/Mol) werden binnen 2 h tropfenweise unter Rühren zu einer Mischung aus 15,0 g (37,9 mMol) 2-(2-Hydroxy-4-butenyloxyphenyl)-4,6-diphenyl-1,3,5-triazin und 2,5 mg (0,0067 mMol) $PtCl_2$(Styrol)-Komplex in 70 ml Toluol gegeben, die bei 100°C unter Stickstoff gehalten wird. Anschließend wird für 10 h unter Rühren auf Rückflußtemperatur gehalten.

Anschließend werden 20 g (178 mMol) 1-Octen zugesetzt und für weitere 24 h zum Rückfluß erhitzt. Nach Abkühlen und Einengen wird der Rückstand durch Chromatographie gereinigt (Silicagel; Gradient von Petrolether/Toluol 6:4 auf Toluol/Ethylacetat 4:1). Man erhält 4,4 g einer Verbindung der Formel

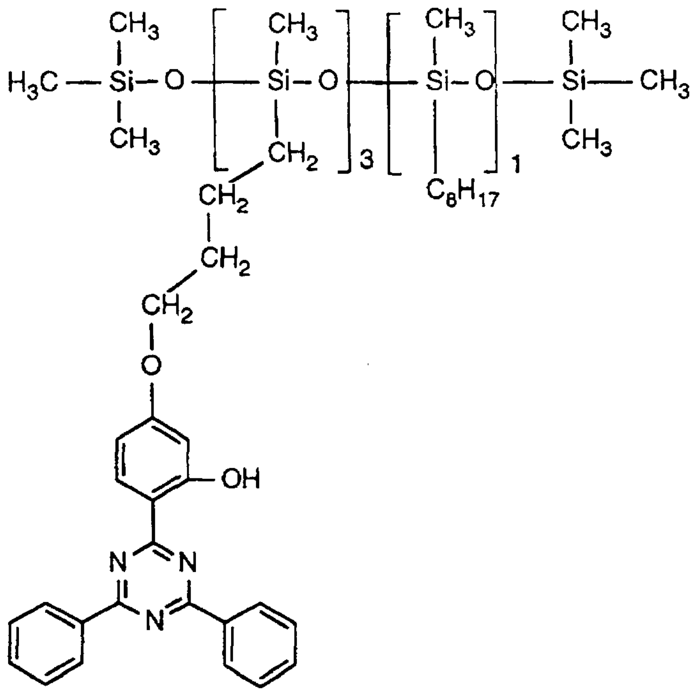

(mittlere Zusammensetzung basierend auf $^1$H-NMR) als gelbliches Harz vom Molekulargewicht $M_n$ = 2400 g/Mol (GPC).

| Elementaranalyse | % C | % H | % N | % Si |
|---|---|---|---|---|
| berechnet | 65,86 | 6,71 | 7,43 | 9,94 |
| gefunden | 63,08 | 6,27 | 7,28 | 11,07 |

B2) Eine Lösung aus 1,0 g (1,16 mMol) Polymethyl-(3-glycidyloxypropyl)siloxan (Verbindung aus A1), 0,8 g (2,32 mMol) 2-(2,4-Dihydroxyphenyl)-4,6-diphenyl-1,3,5-triazin, 40 mg (0,124 mMol) Tetrabutylammoniumbromid in 10 ml Xylol wird unter Rühren und unter Stickstoff für 24 h auf 120°C gehalten. Nach Abkühlen und Einengen wird der Rückstand durch Chromatographie gereinigt (Silicagel; Gradient von Toluol auf Ethylacetat). Man erhält 0,9 g einer Verbindung der Formel

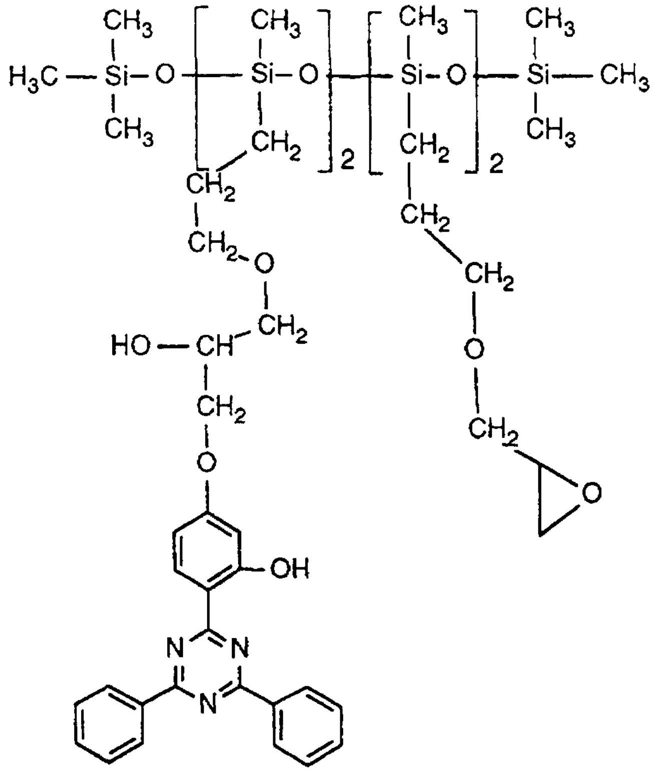

(mittlere Zusammensetzung basierend auf $^1$H-NMR) als gelbliches Harz.

| Elementaranalyse | % C | % H | % N | % Si |
|---|---|---|---|---|
| berechnet | 59,19 | 6,80 | 5,45 | 10,93 |
| gefunden | 58,45 | 6,63 | 5,35 | 10,80 |

B3) 8,0 g (20 mMol) Polymethylhydrogensiloxan (MW = 400 g/Mol) werden binnen 1 h tropfenweise unter Rühren zu einer Lösung aus 13,1 g (30 mMol) 2-(4-Allyloxy-2-hydroxyphenyl)-4,6-di(2,4-dimethylphenyl)-1,3,5-triazin und 3 mg (0,008 mMol) $PtCl_2$(Styrol)-Komplex in 50 ml Toluol gegeben, die bei 100°C unter Stickstoff gehalten wird. Die Mischung wird für 12 h unter Rühren auf 100°C gehalten. Anschließend werden 30 g (267 mMol) 1-Octen zugesetzt und für weitere 24 h auf 100°C gehalten. Nach Abkühlen auf 20-25°C wird Bleicherde (prolith rapid® ; Hersteller Caffaro, Mailand/IT) zugegeben und filtriert. Nach Einengen erhält man 22,9 g einer Verbindung der mittleren Formel (basierend auf $^1$H-NMR)

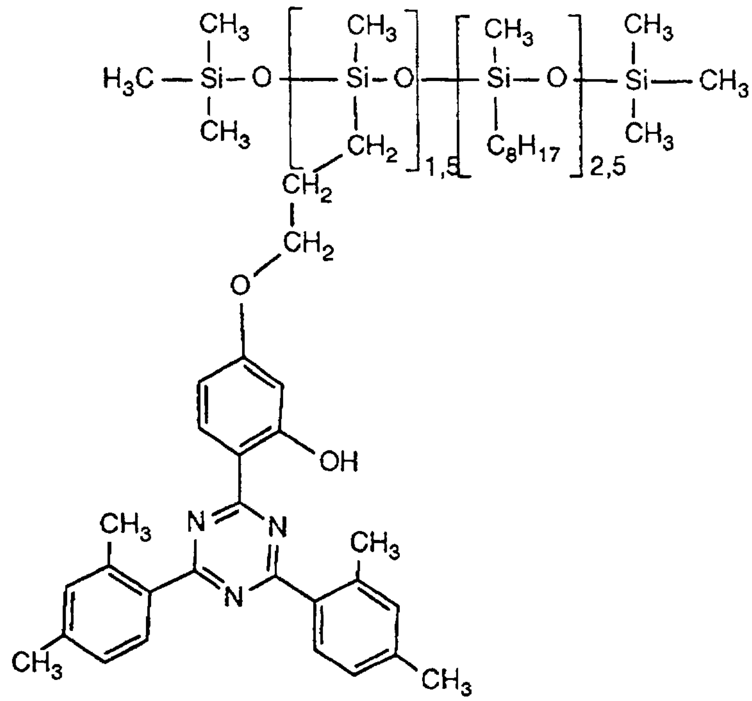

als gelbliches Harz ($M_n$= 1350 g/Mol, $M_w$=2100 g/Mol; ermittelt mit GPC).

B4) 4,5 g (3 mMol) Polymethylhydrogensiloxan (MW = 1500 g/Mol) werden binnen 1 h tropfenweise unter Rühren zu einer Lösung aus 13,1 g (30 mMol) 2-(4-Allyloxy-2-hydroxyphenyl)-4,6-bis(2,4-dimethylphenyl)-1,3,5-triazin und 3 mg (0,008 mMol) $PtCl_2$(Styrol)-Komplex in 50 ml Toluol gegeben, die bei 80°C unter Stickstoff gehalten wird. Die Mischung wird für 4 h unter Rühren auf 80°C gehalten. Anschließend werden 30 g (267 mMol) 1-Octen zugesetzt und für weitere 10 h auf 80°C gehalten. Nach Abkühlen auf 20-25°C wird Bleicherde (prolith rapid® ; Hersteller Caffaro, Mailand/IT) zugegeben und filtriert. Nach Ausfällen des Produktes mit Aceton erhält man 3,5 g einer Verbindung der mittleren Formel (basierend auf $^1$H-NMR)

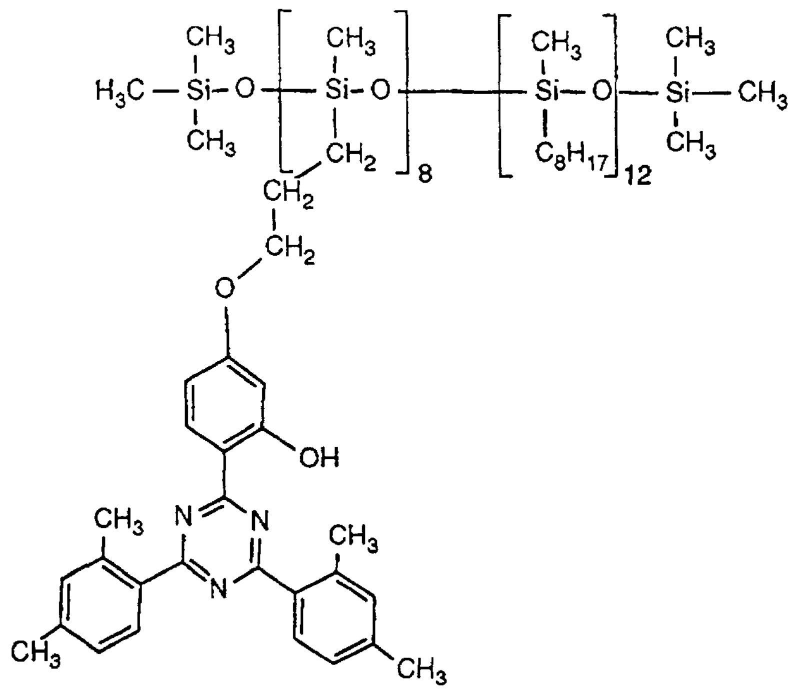

als gelbes Harz ($M_n$= 4875 g/Mol, $M_w$= 10100 g/Mol; ermittelt mit GPC).

B5) 8,0 g (20 mMol) Polymethylhydrogensiloxan (MW = 400 g/Mol) werden binnen 1 h tropfenweise unter Rühren zu einer Lösung aus 11,4 g (30 mMol) 2-(4-Allyloxy-2-hydroxyphenyl)-4,6-diphenyl-1,3,5-triazin und 3 mg (0,008 mMol) $PtCl_2$(Styrol)-Komplex in 50 ml Toluol gegeben, die bei 100°C unter Stickstoff gehalten wird. Die Mischung wird für 17 h unter Rühren auf 100°C gehalten. Anschließend werden 30 g (267 mMol) 1-Octen zugesetzt und für weitere 24 h auf 100°C gehalten. Nach Abkühlen auf 20-25°C wird eingeengt und chromatographisch gereinigt (Silikagel; Gradient Toluol zu Toluol/Essigester 1:1). Man erhält 6,8 g einer Verbindung der mittleren Formel (basierend auf $^1$H-NMR)

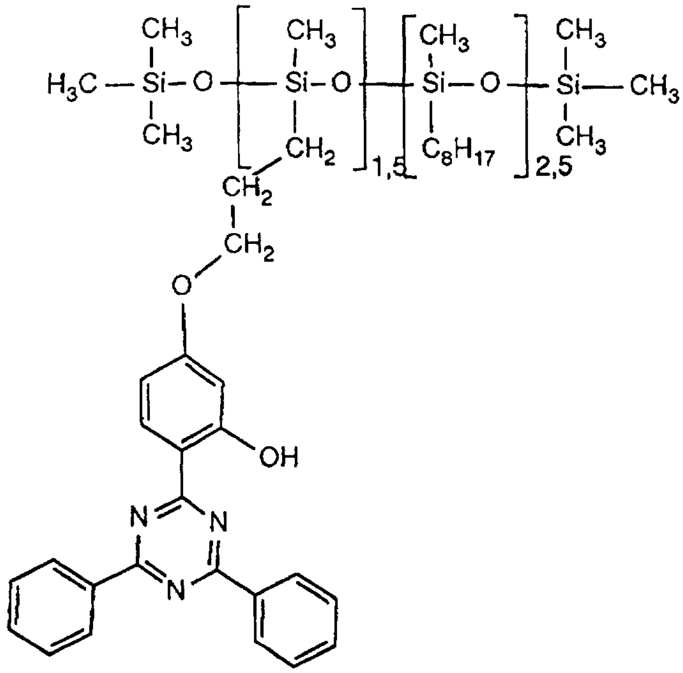

als gelbes Harz ($M_n$= 1650 g/Mol, $M_w$= 2470 g/Mol; ermittelt mit GPC).

B6) Eine Lösung aus 3,0 g (1,16 mMol) Polymethyl-(3-glycidyloxypropyl)siloxan (Verbindung aus A1), 4,77 g (13,96 mMol) 2-(2,4-Dihydroxyphenyl)-4,6-diphenyl-1,3,5-triazin, 1,13 g (3,5 mMol) Tetrabutylammoniumbromid in 40 ml Xylol wird unter Rühren und unter Stickstoff für 24 h auf 120°C gehalten. Nach Abkühlen und Einengen wird der Rückstand durch Chromatographie gereinigt (Silicagel; Gradient von Toluol auf Ethylacetat). Man erhält 3,0 g einer Verbindung der Formel

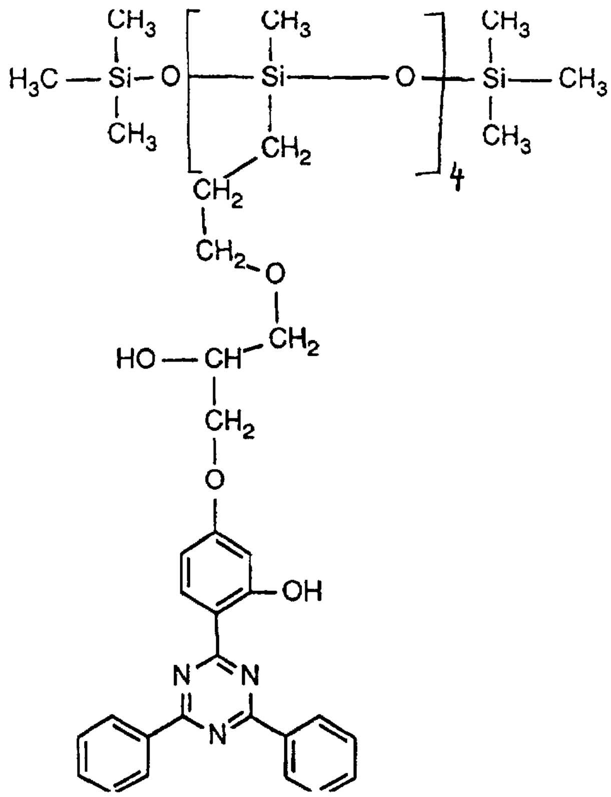

(mittlere Zusammensetzung basierend auf $^1$H-NMR) als gelbliches Harz.

| Elementaranalyse | % C | % H | % N | % Si |
|---|---|---|---|---|
| berechnet | 63,70 | 6,07 | 7,55 | 7,57 |
| gefunden | 61,99 | 6,00 | 6,90 | 8,13 |

B7) 5,8 g (60 mMol) Polymethylhydrogen-dimethylsiloxan Copolymer (MW = 950 g/Mol) werden binnen 1 h tropfenweise unter Rühren zu einer bei 100°C gehaltenen Lösung aus 11,4 g (30 mMol) 2-(4-Allyloxy-2-hydroxyphenyl)-4,6-diphenyl-1,3,5-triazin und 3 mg (0,008 mMol) $PtCl_2$(Styrol)-Komplex in 50 ml Toluol gegeben. Die Mischung wird für 20 h unter Rühren auf 100°C erhitzt. Nach Abkühlen auf 20-25°C wird eingeengt und das Produkt durch Ausfällen mit Aceton gereinigt. Man erhält 8,3 g einer Verbindung der statistischen Formel (basierend auf $^1$H-NMR)

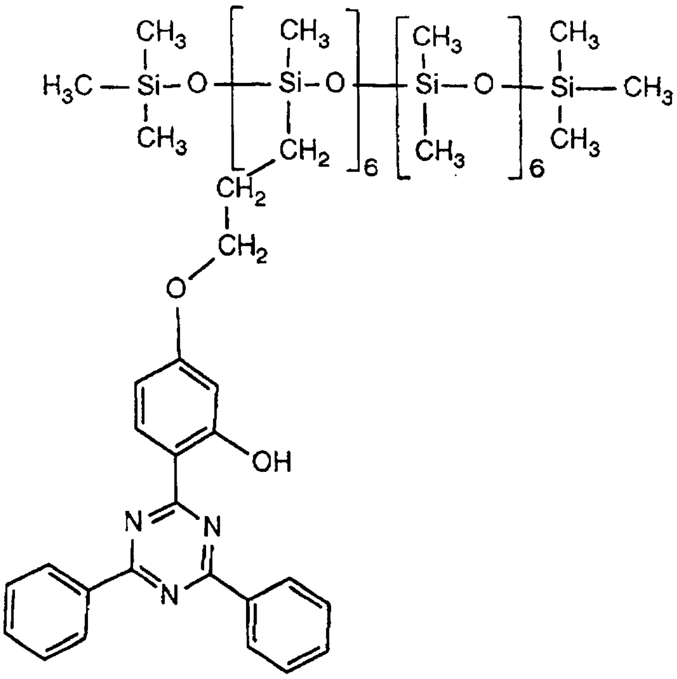

als gelben Feststoff ($M_n$= 5850 g/Mol, $M_w$= 10760 g/Mol; ermittelt mit GPC).

B8) Eine Lösung aus 5,46 g (16 mMol) 2-(2,4-Dihydroxyphenyl)-4,6-diphenyl-1,3,5-triazin, 10 g (11,7 mMol) Methyloctyl-methyl-(3-glycidyloxypropyl)-siloxan (Verbindung aus A3) und 0,5 g (1,5 mMol) Tetrabutylammoniumbromid in 80 ml Xylol wird unter Rühren und unter Stickstoff für 24 h auf Rückflußtemperatur gehalten. Nach Abkühlen und Einengen wird der Rückstand durch Chromatographie gereinigt (Silicagel; Toluol/Ethylacetat 95:5). Man erhält 1,8 g einer Verbindung der der statistischen Formel

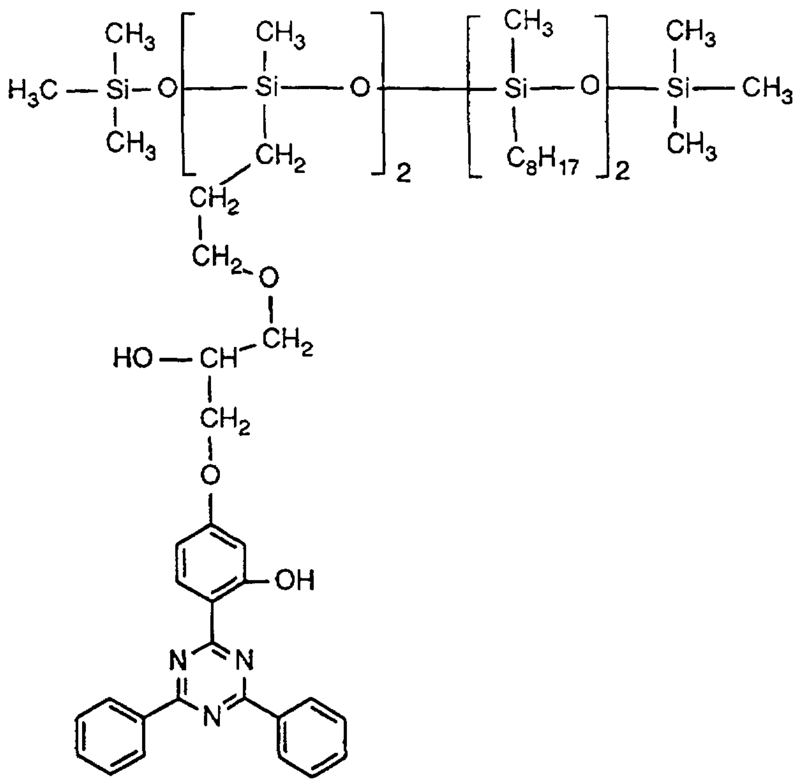

(mittlere Zusammensetzung basierend auf $^1$H-NMR) als gelbes Harz ($M_n$= 2270 g/Mol, $M_w$= 3600 g/Mol; ermittelt mit GPC).

B9) 3,6 g (9 mMol) Polymethylhydrogensiloxan (MW = 400 g/Mol) werden wie in Beispiel B3 beschrieben mit 13,1 g (30 mMol) 2-(4-Allyloxy-2-hydroxyphenyl)-4,6-di(2,4-dimethylphenyl)-1,3,5-triazin und 30 g (267 mMol) 1-Octen umgesetzt.

Nach Abkühlen auf 20-25°C und Chromatographie (Silicagel; Gradient von Toluol/Hexan 1:1 auf Toluol) erhält man 10,7 g einer Verbindung der mittleren Formel (basierend auf $^1$H-NMR)

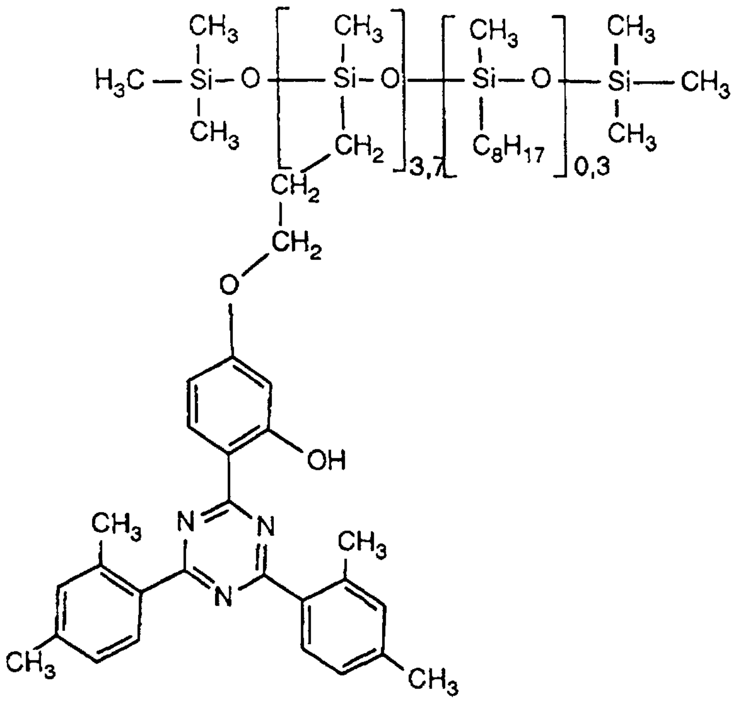

als gelbes Harz ($M_n$= 1200 g/Mol, $M_w$=1750 g/Mol; ermittelt mit GPC).

B10) Nach der in B8) gegebenen Vorschrift und unter Verwendung von 6,36 g (16 mMol) 2-(2,4-Dihydroxyphenyl)-4,6-bis(2,4-dimethylphenyl)-1,3,5-triazin erhält man 3 g einer Verbindung der der statistischen Formel

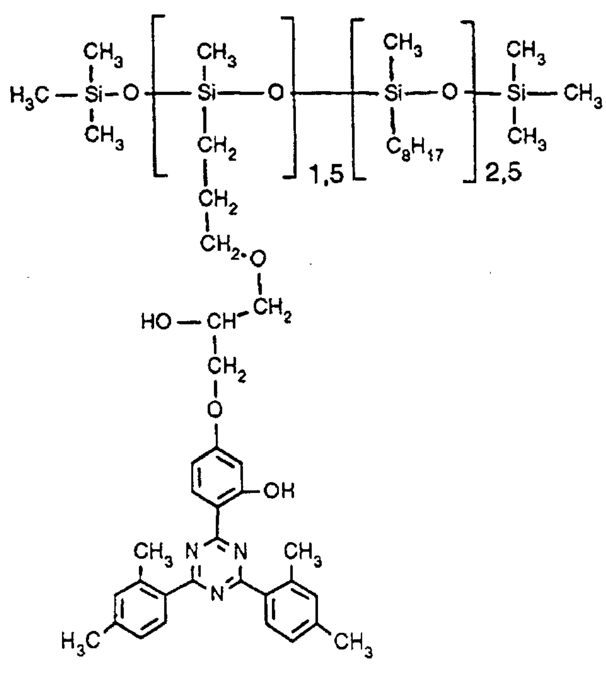

(mittlere Zusammensetzung basierend auf $^1$H-NMR) als gelbes Harz ($M_n$= 2300 g/Mol, $M_w$= 3700 g/Mol; ermittelt mit GPC).

B11) Eine Lösung aus 4,6 g (11,6 mMol) 2-(2,4-Dihydroxyphenyl)-4,6-bis(2,4-dimethylphenyl)-1,3,5-triazin, 5 g (5,8 mMol) Polymethyl-(3-glycidyloxypropyl)-siloxan (Verbindung aus A1) und 0,37 g (1,1 mMol) Tetrabutylammoniumbromid in 80 ml Xylol wird unter Rühren und unter Stickstoff für 24 h auf Rückflußtemperatur gehalten. Nach Abkühlen und Einengen wird der Rückstand durch Chromatographie gereinigt (Silicagel; Toluol/Ethylacetat 95:5). Man

erhält 7,8 g einer Verbindung der der statistischen Formel

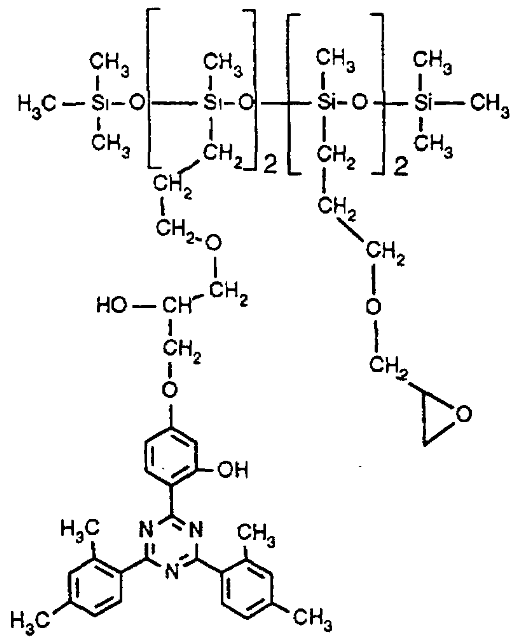

(mittlere Zusammensetzung basierend auf $^{1}$H-NMR) als gelbes Harz ($M_n$= 1290 g/Mol, $M_w$= 1950 g/Mol; ermittelt mit GPC).

Epoxidzahl 1,21 Mol/kg (berechnet); 1,09 Mol/kg (gefunden).

B12) Eine Lösung aus 4,6 g (11,6 mMol) 2-(2,4-Dihydroxyphenyl)-4,6-bis(2,4-dimethylphenyl)-1,3,5-triazin, 2,5 g (2,9 mMol) Polymethyl-(3-glycidyloxypropyl)-siloxan (Verbindung aus A1) und 0,2 g (0,6 mMol) Tetrabutylammoniumbromid in 50 ml Xylol wird unter Rühren und unter Stickstoff für 24 h auf Rückflußtemperatur gehalten. Nach Abkühlen und Einengen wird der Rückstand durch Chromatographie gereinigt (Silicagel; Toluol/Ethylacetat 95:5). Man erhält 6,9 g einer Verbindung der der statistischen Formel

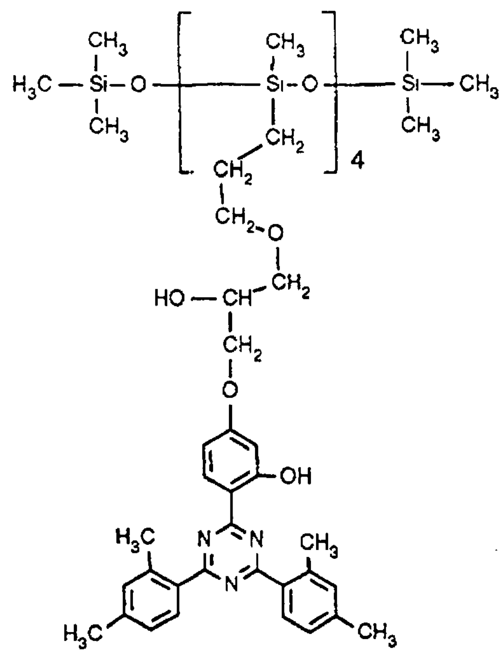

(mittlere Zusammensetzung basierend auf $^{1}$H-NMR) als gelbes Harz ($M_n$= 1350 g/Mol, $M_w$= 2200 g/Mol; ermittelt mit

GPC).

B13) 3,6 g (15 mMol) Tetramethylcyclosiloxan werden binnen 1 h bei 100°C unter Rühren zu einer Lösung aus 11,4 g (30 mMol) 2-(4-Allyloxy-2-hydroxyphenyl)-4,6-diphenyl-1,3,5-triazin und 3 mg (0,008 mMol) $PtCl_2$(Styrol)-Komplex in 50 ml Toluol gegeben. Die Mischung wird für 12 h unter Rühren auf 100°C erhitzt; anschließend werden 10 g (89 mMol) 1-Octen zugesetzt und für weitere 24 h auf 100°C erhitzt Nach Abkühlen auf 20-25°C wird eingeengt und chromatographiert (Silicagel, Toluol). Man erhält 6,7 g einer Verbindung der mittleren statistischen Formel (basierend auf $^1$H-NMR)

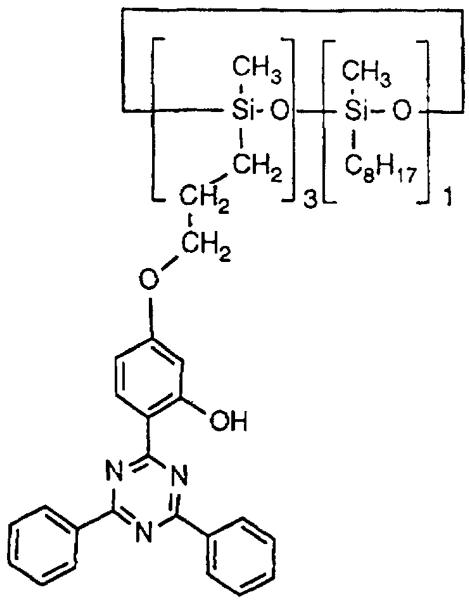

als gelbes Harz ($M_n$= 900 g/Mol, $M_w$= 1380 g/Mol; ermittelt mit GPC).

B14) Es wird nach der in Beispiel B 13 gegebenen Vorschrift gearbeitet, wobei jedoch anstatt 2-(4-Allyloxy-2-hydroxyphenyl)-4,6-diphenyl-1,3,5-triazin 13,1 g (30 mMol) 2-(4-Allyloxy-2-hydroxyphenyl)-4,6-bis(2,4-dimethylphenyl)-1,3,5-triazin eingesetzt werden. Man erhält 6,5 g einer Verbindung der mittleren statistischen Formel (basierend auf $^1$H-NMR)

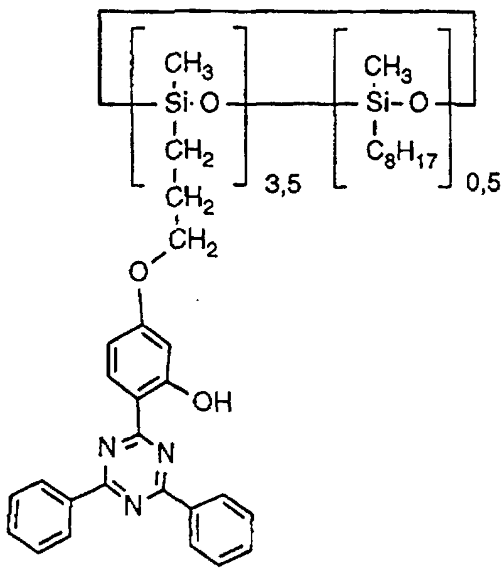

als gelbes Harz ($M_n$= 1000 g/Mol, $M_w$= 2640 g/Mol; ermittelt mit GPC).

C) Anwendungsbeispiele

C1) Stabilisierung eines 2-Schicht Metalliclackes

| Die zu prüfenden Verbindungen werden in 20-25 g Solvesso® 100[4)] gelöst und in einem Klarlack folgender Zusammensetzung geprüft: | |
|---|---|
| Synthacryl® SC 303 [1)] | 27,51 |
| Synthacryl® SC 370 [2)] | 23,34 |
| Maprenal® MF 650 [3)] | 27,29 |
| Butylacetat/Butanol (37/8) | 4,33 |
| Isobutanol | 4,87 |
| Solvesso® 100 [4)] | 2,72 |
| Kristallöl K-30 [5)] | 8,74 |
| Verlaufshilfsmittel Baysilon® MA [6)] | 1,20 |
| | 100,00 g |

1) Acrylatharz, Fa. Hoechst AG; 65 % Lösung in Xylol/Butanol 26:9
2) Acrylatharz, Fa. Hoechst AG; 75 % Lösung in Solvesso®100[4)]
3) Melaminharz, Fa. Hoechst AG; 55 % Lösung in Isobutanol
4) aromat. Kohlenwasserstoffgemisch, Siedebereich 182-203°C (Solvesso® 150) bzw. 161-178°C (Solvesso® 100); Hersteller: Fa. ESSO
5) aliphat. Kohlenwasserstoffgemisch, Siedebereich 145-200°C; Hersteller: Fa. Shell
6) 1 % in Solvesso® 150[4)]; Hersteller: Fa. Bayer AG

Dem Klarlack werden 1,5 % der zu prüfenden Verbindung zugesetzt, bezogen auf den Feststoffgehalt des Lackes. Als Vergleich dient ein Klarlack, der kein Lichtschutzmittel enthält.

Der Klarlack wird mit Solvesso® 100 auf Spritzfähigkeit verdünnt und auf ein vorbereitetes Aluminiumblech (coil coat, Füller, silbermetallic Basislack) gespritzt und bei 130°C 30 Minuten eingebrannt. Es resultiert eine Trockenfilmdicke von 40-50 µm Klarlack.

Die Proben werden dann in einem UVCON® -Bewitterungsgerät der Fa. Atlas Corp. (UVB-313 Lampen) bei einem Zyklus von 8 h UV-Bestrahlung bei 70°C und 4 h Kondensation bei 50°C bewittert.

In regelmäßigen Abständen wird der Oberflächenglanz (20°-Glanz gemäß DIN 67530) der Proben gemessen und die Proben auf Risse untersucht. Die Ergebnisse sind in Tabelle Cl zusammengestellt.

Tab. C1:

| Bewitterungsdauer bis zur Rißbildung und 20°-Glanz nach der angegebenen Bewitterungsdauer | | | | | | |
|---|---|---|---|---|---|---|
| Stabilisator aus Beispiel | Bewitterungsdauer | | | | | |
| | Riß nach | 0 h | 800 h | 1600 h | 2000 h | 2400 h |
| keiner | 1200 h | 86 | 46 | | | |
| B6 | 2800 h | 86 | 89 | 86 | 85 | 54 |

Die erfindungsgemäß stabiliserten Proben weisen eine bessere Bewitterungsstabilität auf als die unstabilisierte Vergleichsprobe.

## Patentansprüche

**1.** Oligomere oder polymere Verbindung der Formel I,

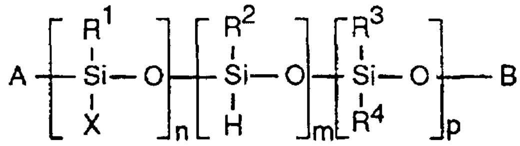

(I)

oder entsprechend vernetzte Verbindung, wobei die Einheiten der Formeln Ia, Ib und/oder Ic

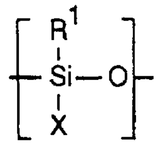

(Ia)

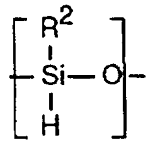

(Ib)

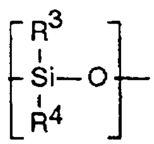

(Ic)

statistisch oder in Blöcken angeordnet sind, und worin

n eine Zahl aus dem Bereich 1-100;
m eine Zahl aus dem Bereich 0-100;
p eine Zahl aus dem Bereich 0-100 darstellt;
A ein Rest der Formel

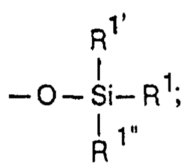

B ein Rest der Formel

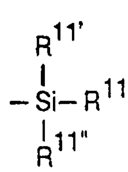

ist;
oder A und B im Fall, daß die Summe n + m + p eine Zahl aus dem Bereich 3-10 ist und die Summe m + p größer als 0 ist, gemeinsam eine direkte Bindung darstellen können;
$R^1$, $R^{1'}$, $R^{1''}$, $R^{11}$, $R^{11'}$, $R^{11''}$, $R^2$ und $R^3$, unabhängig voneinander, $C_1$-$C_{18}$-Alkyl, $C_5$-$C_{12}$-Cycloalkyl oder Phenyl bedeuten;

$R^4$ $C_1$-$C_{18}$-Alkyl, Phenyl, $C_2$-$C_6$-Hydroxyalkyl, $C_2$-$C_6$-Aminoalkyl,

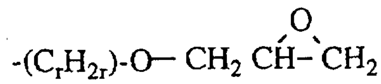
,
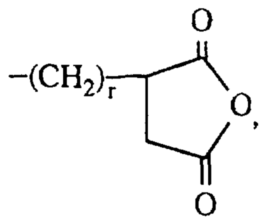
,
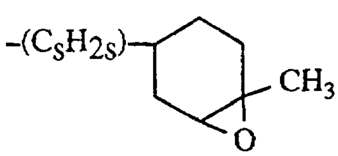

oder

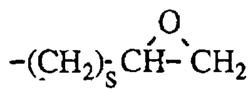

bedeutet, wobei r eine Zahl aus dem Bereich 2-6 ist und s 2 oder 3 bedeutet;
X ein mono- oder divalenter Rest der Formel II ist

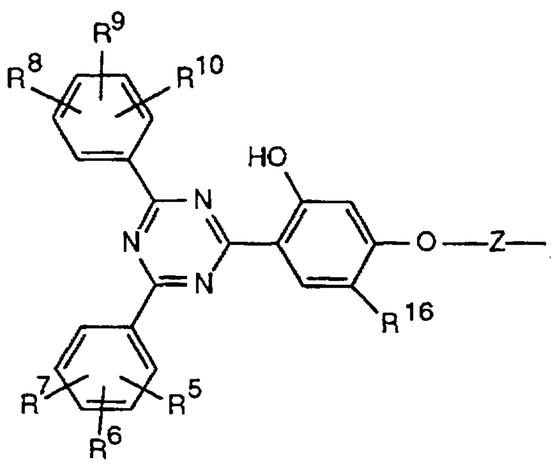
(II)

worin
$R^5$ und $R^7$, unabhängig voneinander, Wasserstoff, $C_1$-$C_{12}$-Alkyl, $C_3$-$C_6$-Alkenyl, Halogen oder CN darstellen;
$R^6$ Wasserstoff, $C_1$-$C_{12}$-Alkyl, $C_3$-$C_6$-Alkenyl, Halogen, CN, einen cycloaliphatischen, gesättigten Kohlenwasserstoffrest enthaltend 5-12 Kohlenstoffatome oder Phenyl bedeutet; oder
$R^5$ OH, $C_1$-$C_{18}$-Alkoxy oder $C_3$-$C_6$-Alkenoxy ist; $R^7$ Wasserstoff darstellt; und $R^6$ als monovalenter Rest eine der Bedeutungen OH, $C_1$-$C_{18}$-Alkoxy, $C_3$-$C_6$-Alkenoxy oder -O-$CH_2$-CH($OR^{12}$)-$CH_2$-O-$R^{17}$ hat, oder $R^6$ einen divalenten Rest der Formel -O-Z- darstellt, der über das Sauerstoffatom an den Phenylring gebunden ist;
$R^8$ die für $R^5$ angegebenen Bedeutungen umfaßt;
$R^9$ die für $R^6$ angegebenen Bedeutungen umfaßt; und
$R^{10}$ die für $R^7$ angegebenen Bedeutungen umfaßt;
$R^{12}$ Wasserstoff oder $C_1$-$C_{18}$-Alkyl ist;
$R^{16}$ Wasserstoff, $C_1$-$C_{24}$-Alkyl, $C_5$-$C_{12}$-Cycloalkyl oder $C_7$-$C_{15}$-Phenylalkyl ist;
$R^{17}$ $C_1$-$C_{18}$-Alkyl ist;
-O-Z- einen über das Sauerstoffatom an den Phenylring gebundenen Rest einer der Formeln -O-$(CH_2)_q$-O-$R^{21}$-,

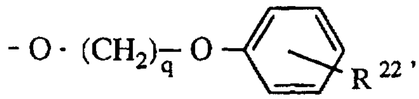

$-O-CH_2-CH(OR^{12})-CH_2-O-(CH_2)_t-$,

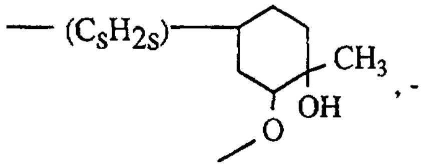

$-O-CO-(CH_2)_w-$ oder $-O-CH(R^{12})-CO-O-(CH_2)_w-$, oder $-O-C_3-C_{18}$-Alkylen darstellt;
$R^{21}$ $C_3-C_{12}$-Alkylen oder Cyclohexylen ist; und
$R^{22}$ $C_2-C_{12}$-Alkylen ist;

wobei q eine Zahl aus dem Bereich 2-4, t eine Zahl aus dem Bereich 3-4, und w eine Zahl aus dem Bereich 3-12 ist.

**2.** Verbindung der Formel I oder entsprechend vernetzte Verbindung gemäß Anspruch 1, worin X ein Rest der Formel IIa ist

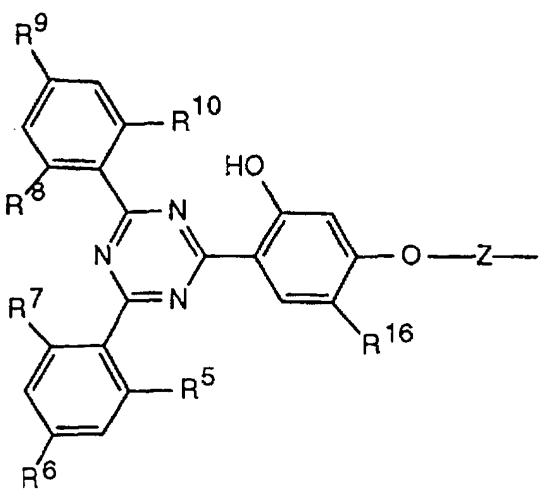

(IIa).

**3.** Verbindung der Formel I oder entsprechend vernetzte Verbindung gemäß Anspruch 1, worin

$R^1$, $R^{1'}$, $R^{1''}$, $R^{11}$, $R^{11'}$, $R^{11''}$, $R^2$ und $R^3$ Methyl sind;
$R^4$ $C_1-C_{18}$Alkyl, Hydroxypropyl, Aminopropyl oder

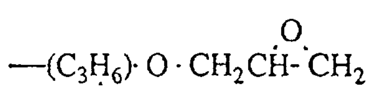

darstellt;
$R^5$ und $R^7$, unabhängig voneinander, Wasserstoff oder $C_1-C_4$-Alkyl darstellen;
$R^6$ Wasserstoff, $C_1-C_4$-Alkyl oder Phenyl bedeutet; oder
$R^5$ OH oder $C_1-C_6$-Alkoxy oder $C_3-C_6$-Alkenoxy ist; $R^7$ Wasserstoff darstellt; und $R^6$ als monovalenter Rest eine der Bedeutungen OH, $C_1-C_6$-Alkoxy oder $-O-CH_2-CH(OR^{12})-CH_2-O-R^{17}$ hat, oder $R^6$ einen divalenten Rest der Formel -O-Z- darstellt, der über das Sauerstoffatom an den Phenylring gebunden ist;
$R^8$ die für $R^5$ angegebenen Bedeutungen umfaßt;

$R^9$ die für $R^6$ angegebenen Bedeutungen umfaßt; und
$R^{10}$ die für $R^7$ angegebenen Bedeutungen umfaßt;
$R^{12}$ Wasserstoff oder $C_1$-$C_8$-Alkyl ist;
$R^{16}$ Wasserstoff ist;
$R^{17}$ $C_1$-$C_{18}$-Alkyl ist; und
-O-Z- einen über das Sauerstoffatom an den Phenylring gebundenen Rest einer der Formeln -O-$CH_2$-CH($OR^{12}$)-$CH_2$-O-$(CH_2)_3$-, -O-CO-$(CH_2)_w$-, wobei w eine Zahl aus dem Bereich 3-12 ist, oder -O-$C_3$-$C_6$-Alkylen darstellt.

**4.** Verbindung der Formel I oder entsprechend vernetzte Verbindung gemäß Anspruch 2, worin

n eine Zahl aus dem Bereich 1-100 ist;
m = 0 ist;
p eine Zahl aus dem Bereich 0-100 ist; und
die Summe n + p eine Zahl aus dem Bereich 3-100 ist;
A Trimethylsilyloxy und B Trimethylsilyl ist; oder A und B gemeinsam im Fall, daß die Summe der Einheiten der Formeln Ia und Ic 3 bis 7 beträgt, eine direkte Bindung umfassen;
$R^1$, $R^2$ und $R^3$ Methyl sind;
$R^4$ $C_1$-$C_{18}$-Alkyl oder

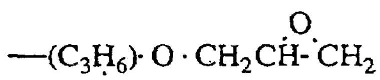

darstellt;
$R^5$ und $R^7$, unabhängig voneinander, Wasserstoff oder Methyl darstellen;
$R^6$ Wasserstoff, Methyl oder Phenyl bedeutet;
$R^8$ die für $R^5$ angegebenen Bedeutungen umfaßt;
$R^9$ die für $R^6$ angegebenen Bedeutungen umfaßt;
$R^{10}$ die für $R^7$ angegebenen Bedeutungen umfaßt;
$R^{16}$ Wasserstoff ist; und
Z $C_3$-$C_6$-Alkylen oder -O-$CH_2$-CH(OH)-$CH_2$-O-$(CH_2)_3$- ist.

**5.** Verbindung erhältlich durch Umsetzung einer ungesättigten Verbindung der Formel IV

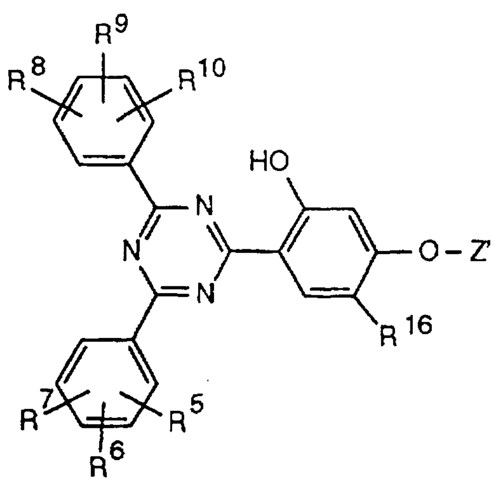

(IV)

mit einer Si-H enthaltenden Verbindung der Formel VI

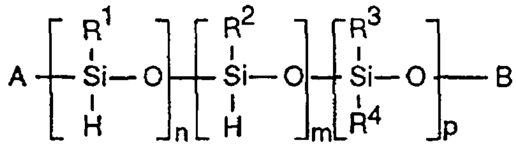

(VI)

worin Z' einer der Formeln $-(CH_2)_q-O-R^{23}$,

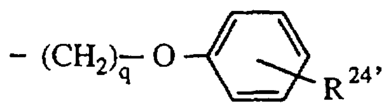

$-CH_2-CH(OR^{12})-CH_2-O-(CH_2)_{p-2}-CH=CH_2$,

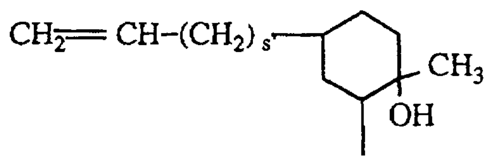

$-CO-(CH_2)_{w-2}-CH=CH_2$ oder $-CH(R^{12})-CO-O-(CH_2)_{w-2}-CH=CH_2$ entspricht oder $C_3$-$C_{18}$-Alkenyl darstellt;
$R^{23}$ $C_3$-$C_{12}$-Alkenyl oder Cyclohexenyl ist;
$R^{24}$ $C_2$-$C_{12}$-Alkenyl ist; und
s' 0 oder 1 ist; und die übrigen Symbole die in Anspruch 1 angegebenen Bedeutungen haben;
oder durch Umsetzung einer ungesättigten Verbindung der Formel IV mit einer Verbindung der Formel VII

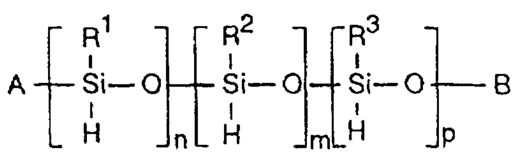

(VII)

und einer ungesättigten Verbindung VIII ausgewählt aus $C_2$-$C_{18}$-Alken, besonders $C_3$-$C_{18}$-Alken, $C_3$-$C_6$-Hydroxyalken, $C_3$-$C_6$-Aminoalken,

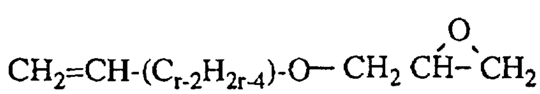

,

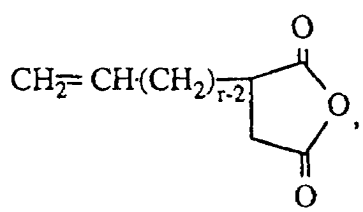

,

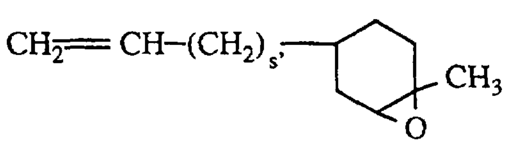

oder

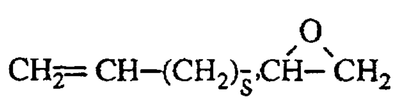

,

, wobei auf n+m+p Molanteile der Verbindung der Formel VII n Molanteile der ungesättigten Verbindung der Formel IV und p Molanteile der ungesättigten Verbindung VIII eingesetzt werden.

**6.** Zusammensetzung enthaltend

A) ein gegen Schädigung durch Licht, Sauerstoff und/oder Hitze empfindliches organisches Material und
B) als Stabilisator eine Verbindung der Formel I oder eine entsprechend vernetzte Verbindung gemäß Anspruch 1.

**7.** Stabilisierte Zusammensetzung gemäß Anspruch 6, **dadurch gekennzeichnet, daß** sie als weitere Komponente einen oder mehrere andere Stabilisatoren und/oder sonstige Zusatzstoffe enthält.

**8.** Stabilisierte Zusammensetzung gemäß Anspruch 7, **dadurch gekennzeichnet, daß** sie als weitere Komponente ein Lichtschutzmittel aus der Klasse der sterisch gehinderten Amine, der 2-(2-Hydroxyphenyl)-1,3,5-triazine oder/ und der Klasse der 2-(2'-Hydroxyphenyl)-benztriazole enthält.

**9.** Stabilisierte Zusammensetzung gemäß Anspruch 6, **dadurch gekennzeichnet, daß** das organische Material der Komponente A organisches Polymer oder ein Bindemittel für einen Lack ist.

**10.** Stabilisierte Zusammensetzung gemäß Anspruch 6 enthaltend den Stabilisator der Komponente B in einer Meng von 0,01 bis 5 Gew.-% bezogen auf Komponente A.

**11.** Verwendung einer Verbindung der Formel I oder eine entsprechend vernetzte Verbindung gemäß Anspruch 1 als Stabilisator für organisches Material gegen deren Schädigung durch Licht, Sauerstoff und Wärme.

**12.** Verwendung gemäß Anspruch 11 in Lacken oder fotografischem Material.

**13.** Verfahren zum Stabilisieren organischen Materials gegen Schädigung durch Licht, Sauerstoff und Wärme, **dadurch gekennzeichnet, daß** man diesem Material mindestens eine Verbindung der Formel I oder eine entsprechende vernetzte Verbindung gemäß Anspruch 1 beimischt.

## Claims

**1.** An oligomeric or polymeric compound of the formula I

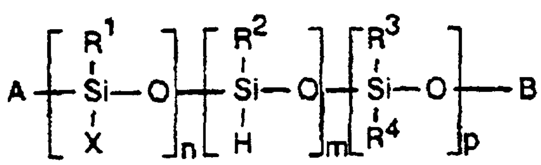

(I)

or correspondingly crosslinked compound, in which the units of the formulae Ia, Ib and/or Ic

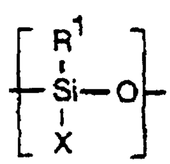

(Ia)

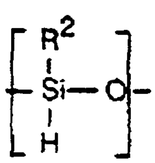

(Ib)

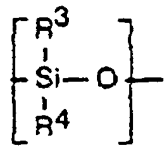 (Ic)

are arranged randomly or in blocks, and in which

n is a number from the range 1-100;
m is a number from the range 0-100;
p is a number from the range 0-100;
A is a radical of the formula

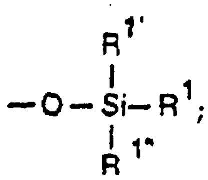

B is a radical of the formula

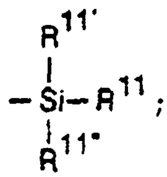

or A and B, where the sum n + m + p is a number from the range 3-10 and the sum m + p is greater than 0 can together be a direct bond;
$R^1$, $R^{1'}$, $R^{1''}$, $R^{11}$, $R^{11'}$, $R^{11''}$, $R^2$ and $R^3$, independently of one another, are $C_1$-$C_{18}$alkyl, $C_5$-$C_{12}$cycloalkyl or phenyl;
$R^4$ is $C_1$-$C_{18}$alkyl, phenyl, $C_2$-$C_6$hydroxyalkyl, $C_2$-$C_6$aminoalkyl,

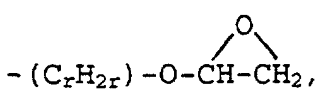

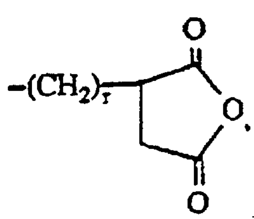 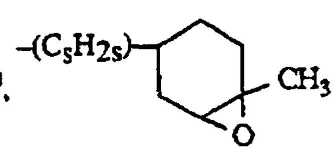 or 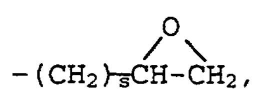

where r is a number from the range 2-6 and s is 2 or 3;
X is a mono- or divalent radical of the formula II

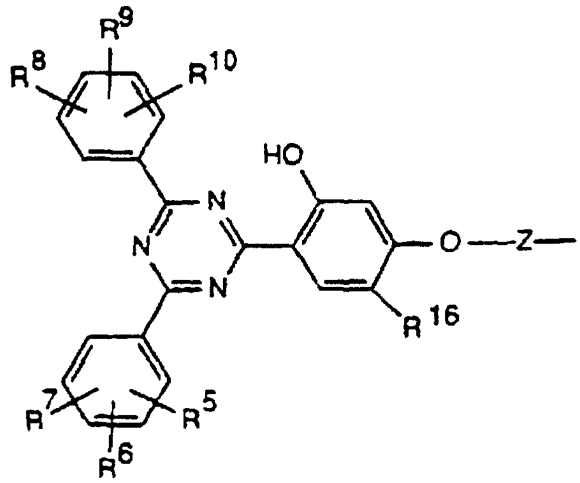

(II),

where

$R^5$ and $R^7$, independently of one another, are hydrogen, $C_1$-$C_{12}$alkyl, $C_3$-$C_6$alkenyl, halogen or CN;

$R^6$ is hydrogen, $C_1$-$C_{12}$alkyl, $C_3$-$C_6$alkenyl, halogen, CN, a cycloaliphatic, saturated hydrocarbon radical containing 5-12 carbon atoms, or is phenyl; or

$R^5$ is OH, $C_1$-$C_{18}$alkoxy or $C_3$-$C_6$alkenoxy; $R^7$ is hydrogen; and $R^6$ as a monovalent radical is OH, $C_1$-$C_{18}$alkoxy, $C_3$-$C_6$alkenoxy or -O-$CH_2$-CH($OR^{12}$)-$CH_2$-O-$R^{17}$, or $R^6$ is a divalent radical of the formula -O-Z- which is attached to the phenyl ring by the oxygen atom;

$R^8$ is as defined for $R^5$;

$R^9$ is as defined for $R^6$; and

$R^{10}$ is as defined for $R^7$;

$R^{12}$ is hydrogen or $C_1$-$C_{18}$alkyl;

$R^{16}$ is hydrogen, $C_1$-$C_{24}$alkyl, $C_5$-$C_{12}$cycloalkyl or $C_7$-$C_{15}$phenylalkyl;

$R^{17}$ is $C_1$-$C_{18}$alkyl;

-O-Z- is a radical which is attached to the phenyl ring by the oxygen atom and is of the formula -O-$(CH_2)_q$-O-$R^{21}$-,

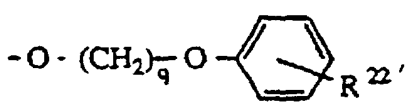

-O-$CH_2$-CH ($OR^{12}$) -$CH_2$-O-$(CH_2)_t$-,

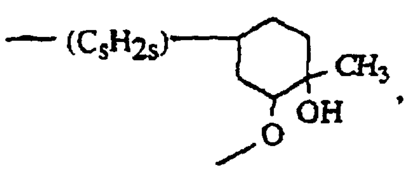

-O-CO-$(CH_2)_w$-, -O-CO-$(CH_2)_w$- or -O-CH($R^{12}$)-CO-O-$(CH_2)_w$-, or is -O-$C_3$-$C_{18}$alkylene;

$R^{21}$ is $C_3$-$C_{12}$alkylene or cyclohexylene; and

$R^{22}$ is $C_2$-$C_{12}$alkylene;

q being a number from the range 2-4, t a number from the range 3-4 and w a number from the range 3-12.

**2.** A compound of the formula I or correspondingly crosslinked compound according to claim 1, wherein X is a radical of the formula IIa

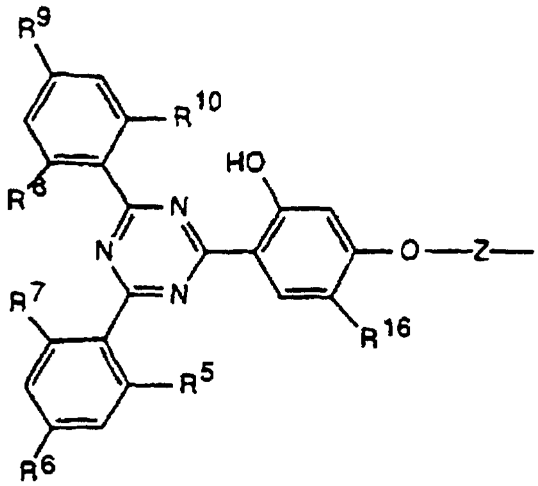

(IIa).

**3.** A compound of the formula I or correspondingly crosslinked compound according to claim 1, wherein

$R^1$, $R^{1'}$, $R^{1''}$, $R^{11}$, $R^{11'}$, $R^{11''}$, $R^2$ and $R^3$ are methyl;
$R^4$ is $C_1$-$C_{18}$alkyl, hydroxypropyl, aminopropyl or

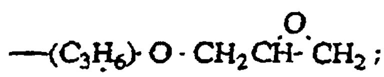

$R^5$ and $R^7$ are, independently of one another, hydrogen or $C_1$-$C_4$alkyl;
$R^6$ is hydrogen, $C_1$-$C_4$alkyl or phenyl; or
$R^5$ is OH or $C_1$-$C_6$alkoxy or $C_3$-$C_6$alkenoxy; $R^7$ is hydrogen; and $R^6$ as a monovalent radical is one of OH, $C_1$-$C_6$alkoxy or -O-$CH_2$-CH($OR^{12}$)-$CH_2$-O-$R^{17}$, or $R^6$ is a divalent radical of the formula -O-Z- which is attached to the phenyl ring by the oxygen atom;
$R^8$ is as defined for $R^5$;
$R^9$ is as defined for $R^6$; and
$R^{10}$ is as defined for $R^7$;
$R^{12}$ is hydrogen or $C_1$-$C_8$alkyl;
$R^{16}$ is hydrogen;
$R^{17}$ is $C_1$-$C_8$alkyl; and
-O-Z- is a radical which is attached to the phenyl ring by the oxygen atom and is of the formula -O-$CH_2$-CH($OR^{12}$)-$CH_2$-O-$(CH_2)_3$-, -O-CO-$(CH_2)_w$-, in which w is a number from the range 3-12, or is -O-$C_3$-$C_6$alkylene.

**4.** A compound of the formula I or correspondingly crosslinked compound according to claim 2, in which

n is a number from the range 1-100;
m is 0;
p is a number from the range 0-100; and
the sum n + p is a number from the range 3-100;
A is trimethylsilyloxy and B is trimethylsilyl; or A and B together, where the sum of the units of the formulae Ia and Ic is from 3 to 7, are a direct bond;
$R^1$, $R^2$ and $R^3$ are methyl;
$R^4$ is $C_1$-$C_{16}$alkyl or

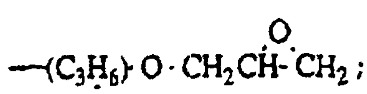

$R^5$ and $R^7$, independently of one another, are hydrogen or methyl;
$R^6$ is hydrogen, methyl or phenyl;

$R^8$ is as defined for $R^5$;
$R^9$ is as defined for $R^6$;
$R^{10}$ is as defined for $R^7$;
$R^{16}$ is hydrogen; and
Z is $C_3$-$C_6$alkylene or $-O-CH_2-CH(OH)-CH_2-O-(CH_2)_3-$.

**5.** A compound obtainable by reacting an unsaturated compound of the formula IV

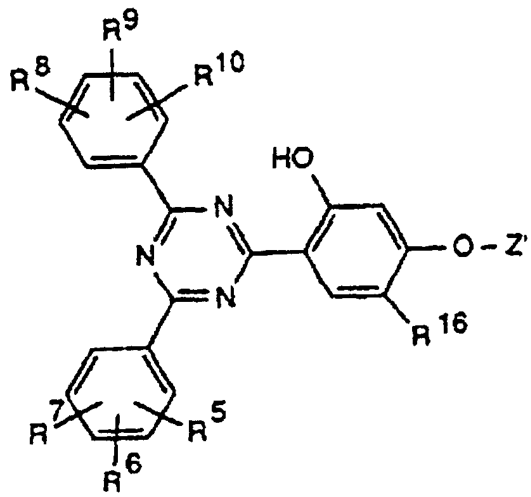

(IV)

with a Si-H-containing compound of the formula VI

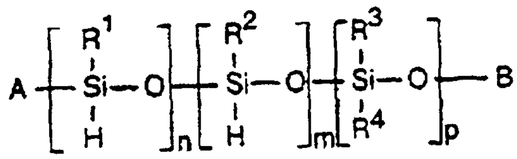

(VI)

in which Z' is of the formula $-(CH_2)_q-O-R^{23}$,

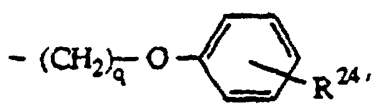

$-CH_2-CH(OR^{12})-CH_2-O-(CH_2)_{p-2}-CH=CH_2$,

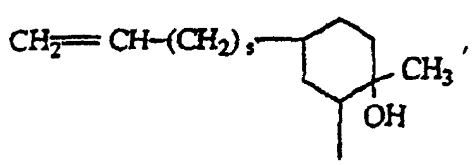

$-CO-(CH_2)_{w-2}-CH=CH_2$ or $-CH(R^{12})-CO-O-(CH_2)_{w-2}-CH=CH_2$ or is $C_3$-$C_{18}$alkenyl;

$R^{23}$ is $C_3$-$C_{12}$alkenyl or cyclohexenyl;
$R^{24}$ is $C_2$-$C_{12}$alkenyl; and
s' is 0 or 1;
and the other symbols are as defined in claim 1;
or by reacting an unsaturated compound of the formula IV with a compound of the formula VII

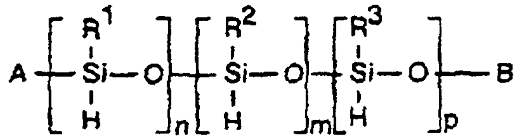 (VII)

and an unsaturated compound VIII selected from the group consisting of $C_2$-$C_{18}$alkene, especially $C_3$-$C_{18}$alkene, $C_3$-$C_6$hydroxyalkene, $C_3$-$C_6$aminoalkene,

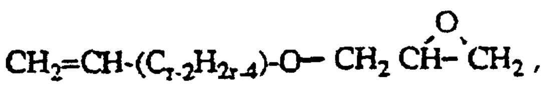

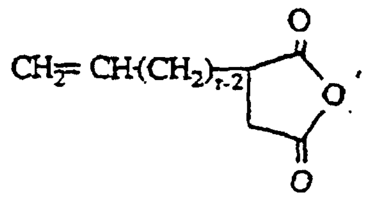

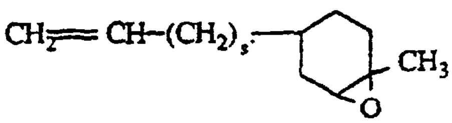

or

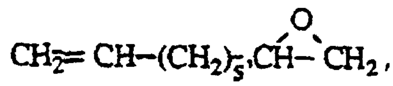

employing n molar fractions of the unsaturated compound of the formula IV and p molar fractions of the unsaturated compound VIII per n+m+p molar fractions of the compound of the formula VII.

**6.** A composition comprising

A) an organic material which is sensitive to damage by light, oxygen and/or heat, and
B) as stabilizer, a compound of the formula I or a correspondingly crosslinked compound according to claim 1.

**7.** A stabilized composition according to claim 6, which comprises as further components one or more other stabilizers and/or other additives.

**8.** A stabilized composition according to claim 7, which comprises as further component a light stabilizer from the class of the sterically hindered amines, the 2-(2-hydroxyphenyl)-1,3,5-triazines and/or the class of the 2-(2'-hydroxyphenyl)benztriazoles.

**9.** A stabilized composition according to claim 6, wherein the organic material of component A is organic polymer or a binder for a coating material.

**10.** A stabilized composition according to claim 6, comprising the stabilizer of component B in a quantity of from 0.01 to 5% by weight based on component A.

**11.** The use of a compound of the formula I or a correspondingly crosslinked compound according to claim 1 as a stabilizer for organic material against damage thereto by light, oxygen and heat.

**12.** The use according to claim 11 in coating materials or photographic material.

**13.** A method of stabilizing organic material against damage by light, oxygen and heat, which comprises admixing to this material at least one compound of the formula I or a correspondingly crosslinked compound according to claim 1.

## Revendications

1. Composé oligomère ou polymère de formule I

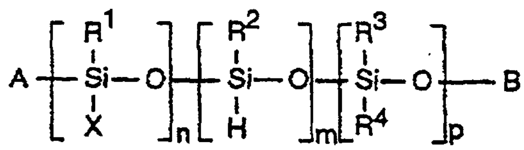

(I)

ou composé réticulé de façon adéquate, les unités de formules Ia, Ib et/ou Ic

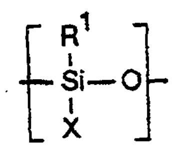

(Ia)

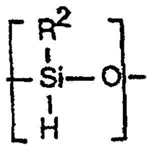

(Ib)

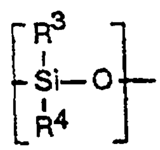

(Ic)

pouvant être disposées statistiquement ou en blocs, et où

n est un nombre dans le domaine de 1 à 100 ;
m est un nombre dans le domaine de 0 à 100 ;
p est un nombre dans le domaine de 0 à 100 ;
A est un reste de formule

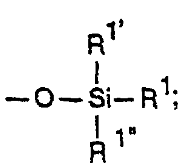

B est un reste de formule

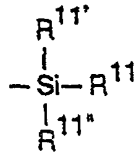
ist;

ou A et B, dans le cas où la somme n + m + p est un nombre dans le domaine de 3 à 10 et la somme m + p est supérieure à zéro, peuvent former ensemble une liaison directe ;
$R^1$, $R^{1'}$, $R^{1''}$, $R^{11}$, $R^{11'}$, $R^{11''}$, $R^2$ et $R^3$ représentent, indépendamment les uns des autres, des groupes alkyle en $C_1$-$C_{18}$, cycloalkyle en $C_5$-$C_{12}$ ou phényle ;
$R^4$ représente des groupes alkyle en $C_1$-$C_{18}$, phényle, hydroxyalkyle en $C_2$-$C_6$, aminoalkyle en $C_2$-$C_6$,

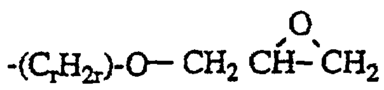
,
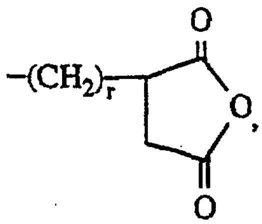
,
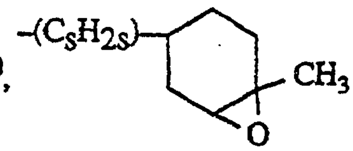

ou

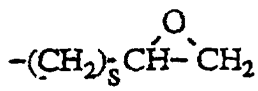
,

r est un nombre dans le domaine de 2 à 6 et s vaut 2 ou 3 ;
X représente un reste mono- ou divalent de formule II

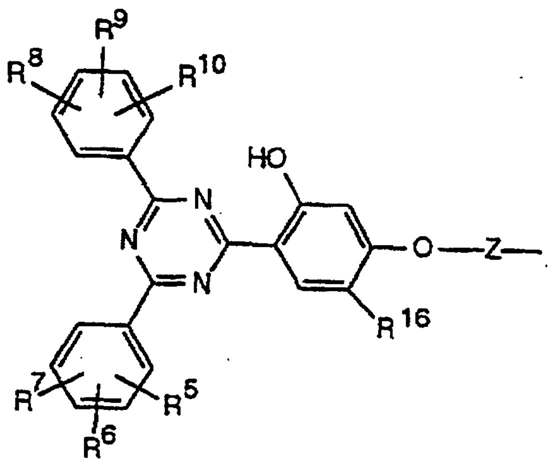
(II),

où
$R^5$ et $R^7$ représentent, indépendamment l'un de l'autre, un atome d'hydrogène, des groupes alkyle en $C_1$-$C_{12}$, alcényle en $C_3$-$C_6$, halogène ou CN ;
$R^6$ représente un atome d'hydrogène, des groupes alkyle en $C_1$-$C_{12}$, alcényle en $C_3$-$C_6$, halogène, CN, un reste hydrocarboné saturé, cycloaliphatique contenant 5 à 12 atomes de carbone ou phényle ; ou
$R^5$ représente des groupes OH, alkoxy en $C_1$-$C_{18}$ alcénoxy en $C_3$-$C_6$ ; $R^7$ représente "un atome d'hydrogène ; et $R^6$ en tant que reste monovalent possède une des significations OH, alkoxy en $C_1$-$C_{18}$, alcénoxy en $C_3$-$C_6$

ou $-O-CH_2-CH(OR^{12})-CH_2-O-R^{17}$, ou $R^6$ représente un reste bivalent de formule -O-Z-, qui est lié au cycle phényle par l'intermédiaire de l'atome d'oxygène ;
$R^8$ possède les significations données pour $R^5$ ;
$R^9$ possède les significations données pour $R^6$ ;
$R^{10}$ possède les significations données pour $R^7$ ;
$R^{12}$ représente un atome d'hydrogène ou un groupe alkyle en $C_1$-$C_{18}$ ;
$R^{16}$ représente un atome d'hydrogène, des groupes alkyle en $C_1$-$C_{24}$, cycloalkyle en $C_5$-$C_{12}$ ou phénylalkyle en $C_7$-$C_{15}$ ;
$R^{17}$ représente un groupe alkyle en $C_1$-$C_{18}$ ;
-O-Z- représente un reste bivalent lié au cycle phényle par l'intermédiaire de l'atome d'oxygène d'une des formules $-O-(CH_2)_q-O-R^{21}$,

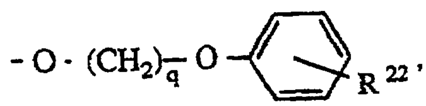

$-O-CH_2-CH(OR^{12})-CH_2-O-(CH_2)_t-$,

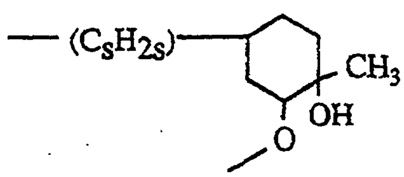 , $-O-CO-(CH_2)_w-$

ou $-O-CH(R^{12})-CO-O-(CH_2)_w-$, ou -O-alkylène en $C_3$-$C_{18}$ ;
$R^{21}$ représente un groupe alkylène en $C_3$-$C_{12}$ ou cyclohexylène ; et
$R^{22}$ représente un groupe alkylène en $C_2$-$C_{12}$ ; où
q est nombre dans le domaine de 2 à 4, t est un nombre dans le domaine de 3 à 4, et w est un nombre dans le domaine de 3 à 12.

**2.** Composé de formule I ou composé réticulé de façon adéquate selon la revendication 1, où X représente un reste de formule IIa

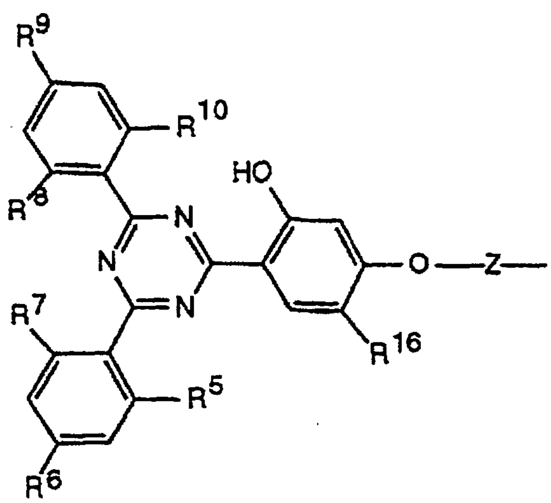

(IIa).

**3.** Composé de formule I ou composé réticulé de façon adéquate selon la revendication 1, où

$R^1$, $R^{1'}$, $R^{1''}$, $R^{11}$, $R^{11'}$, $R^{11''}$, $R^2$ et $R^3$ représentent un groupe méthyle ;
$R^4$ représente des groupes alkyle en $C_1$-$C_{18}$, hydroxypropyle, aminopropyle ou

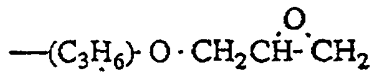 ;

$R^5$ et $R^7$ représentent, indépendamment l'un de l'autre, un atome d'hydrogène ou un groupe alkyle en $C_1$-$C_4$ ;
$R^6$ représente un atome d'hydrogène, un groupe alkyle en $C_1$-$C_4$ ou phényle ; ou
$R^5$ représente un groupe OH ou alkoxy en $C_1$-$C_6$ ou alcénoxy en $C_3$-$C_6$ ; $R^7$ représente un atome d'hydrogène ; et $R^6$, en tant que reste monovalent, possède l'une des significations OH, alkoxy en $C_1$-$C_6$ ou -O-$CH_2$-CH($OR^{12}$) -$CH_2$-O-$R^{17}$, ou $R^6$ représente un reste bivalent de formule -O-Z-, qui est lié au cycle phényle par l'intermédiaire de l'atome d'oxygène ;
$R^8$ possède les significations données pour $R^5$ ;
$R^9$ possède les significations données pour $R^6$ ; et
$R^{10}$ possède les significations données pour $R^7$ ;
$R^{12}$ représente un atome d'hydrogène ou un groupe alkyle en $C_1$-$C_8$ ;
$R^{16}$ représente un atome d'hydrogène ;
$R^{17}$ représente un groupe alkyle en $C_1$-$C_{18}$ ;
-O-Z- représente un reste lié au cycle phényle par l'intermédiaire de l'atome d'oxygène de formule -O-$CH_2$-CH($OR^{12}$)-$CH_2$-O-$(CH_2)_3$-, -O-CO-$(CH_2)_w$-, où w est un nombre dans le domaine de 3 à 12, ou représente un groupe -O-alkylène en $C_3$-$C_6$.

**4.** Composé de formule I ou composé réticulé de façon adéquate selon la revendication 2, où

n est un nombre dans le domaine de 1 à 100 ;
m = 0 ;
p est un nombre dans le domaine de 1 à 100 ; et
la somme de n + p est un nombre dans le domaine de 3 à 100 ;
A représente un groupe triméthylsilyloxy et B un groupe triméthylsilyle ; ou A et B ensemble, pour le cas, où la somme des unités de formule Ia et Ic est de 3 à 7, représentent une liaison directe ;
$R^1$, $R^2$ et $R^3$ représente un groupe méthyle ;
$R^4$ représente des groupes alkyle en $C_1$-$C_{18}$ ou

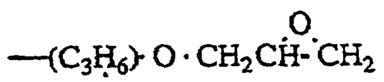 ;

$R^5$ et $R^7$ représentent, indépendamment l'un de l'autre, un atome d'hydrogène ou un groupe méthyle ;
$R^6$ représente un atome d'hydrogène, des groupes méthyle ou phényle ;
$R^8$ possède les significations données pour $R^5$ ;
$R^9$ possède les significations données pour $R^6$ ;
$R^{10}$ possède les significations données pour $R^7$ ;
$R^{16}$ représente un atome d'hydrogène ; et
Z représente des groupes alkylène en $C_3$-$C_6$ ou -O-$CH_2$-CH(OH)-$CH_2$-O- $(CH_2)_3$-.

**5.** Composé que l'on peut obtenir par réaction d'un composé insaturé de formule IV

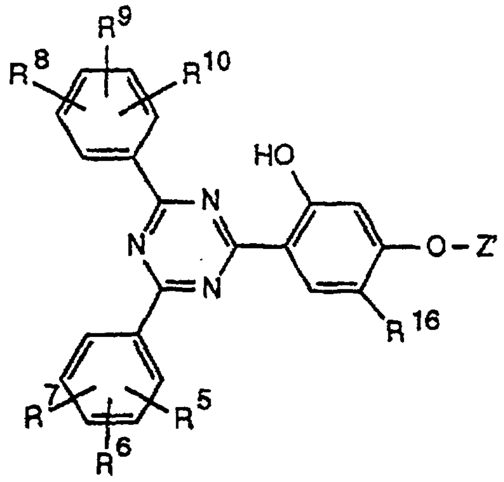

(IV)

avec un composé contenant Si-H de formule VI

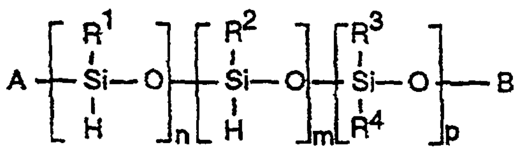

(VI),

où Z' répond à une des formules - $(CH_2)_q$-O-$R^{23}$,

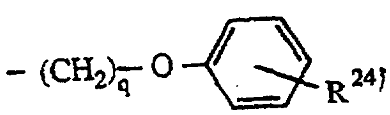

-$CH_2$-$CH(OR^{12})$-$CH_2$-O- $(CH_2)_{p-2}$-CH=$CH_2$,

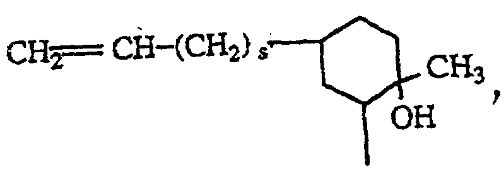

-CO-$(CH_2)_{w-2}$-CH=$CH_2$ ou -CH($R^{12}$)-CO-O-$(CH_2)_{w-2}$-CH=$CH_2$, ou représente un groupe alcényle en $C_3$-$C_{18}$ ;

$R^{23}$ représente un groupe alcényle en $C_3$-$C_{12}$ ou cyclohexényle ;
$R^{24}$ représente un groupe alcényle en $C_2$-$C_{12}$ ; et
s' vaut 0 ou 1 ;
et les autres symboles possèdent les significations données à la revendication 1 ;
ou par réaction d'un composé insaturé de formule IV avec un composé de formule VII

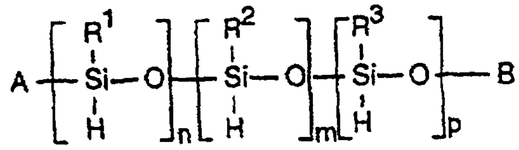

(VII)

et d'un composé insaturé de formule VIII pris parmi des groupes alcène en $C_2$-$C_{18}$, en particulier alcène $C_3$-$C_{18}$, hydroxyalcène $C_3$-$C_6$, aminoalcène en $C_3$-$C_6$,

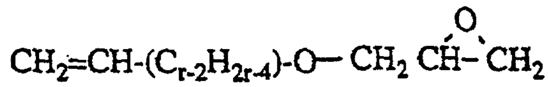

,

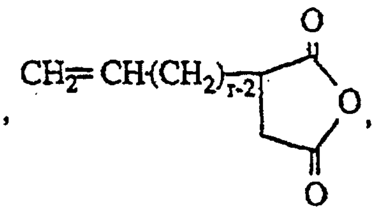

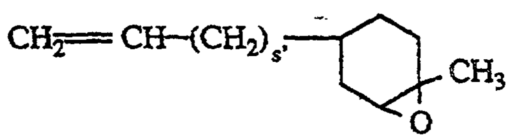

ou

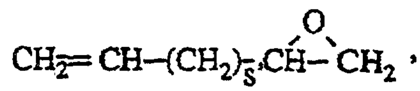

où on utilise pour n+m+p taux molaires du composé de formule VII, n taux molaires du composé insaturé de formule IV et p taux molaires du composé insaturé de formule VIII.

**6.** Composition contenant

A) une matière organique sensible à la dégradation induite par la lumière, l'oxygène et/ou la chaleur et
B) comme stabilisant, un composé de formule Iou un composé réticulé de façon adéquate selon la revendication 1.

**7.** Composition stabilisée selon la revendication 6, **caractérisée en ce qu'**elle contient en tant que d'autres composants, un ou plusieurs d'autres stabilisants et/ou des matières d'addition usuelles.

**8.** Composition stabilisée selon la revendication 7, **caractérisée en ce qu'**elle contient en tant que d'autres composants un agent photo-protecteur pris dans la classe des amines à encombrement stérique, des 2-(2-hydroxyphényl)-1,3,5-triazines ou/et de la classe des 2-(2'-hydroxyphényl)benzotriazoles.

**9.** Composition stabilisée selon la revendication 6, **caractérisée en ce que** la matière organique du composant A est un polymère organique ou un liant pour un vernis.

**10.** Composition stabilisée selon la revendication 6, contenant le stabilisant du composant B en une quantité de 0,01 à 5 % en masse, par rapport au composant A.

**11.** Utilisation d'un composé de formule I ou d'un composé réticulé de façon adéquate selon la revendication 1 en tant que stabilisant pour matière organique contre la dégradation induite par la lumière, l'oxygène et la chaleur.

**12.** Utilisation selon la revendication 11 dans des vernis ou matière photographique.

**13.** Procédé pour la stabilisation de matière organique contre la dégradation induite par la lumière, l'oxygène et la chaleur, **caractérisé en ce qu'**on mélange à cette matière au moins un composé de formule I ou un composé réticulé de façon adéquate selon la revendication 1.